(19)

Europäisches Patentamt
European Patent Office
Office européen des brevets

(11) **EP 4 496 413 A1**

(12) **EUROPEAN PATENT APPLICATION**
published in accordance with Art. 153(4) EPC

(43) Date of publication:
**22.01.2025 Bulletin 2025/04**

(21) Application number: 23792185.3

(22) Date of filing: **19.04.2023**

(51) International Patent Classification (IPC):
*H04W 72/23* (2023.01)          *H04W 72/04* (2023.01)
*H04W 72/12* (2023.01)          *H04L 5/00* (2006.01)
*H04L 1/00* (2006.01)          *H04L 27/26* (2006.01)

(52) Cooperative Patent Classification (CPC):
**H04L 1/00; H04L 5/00; H04L 27/26; H04W 72/04;
H04W 72/12; H04W 72/23**

(86) International application number:
**PCT/KR2023/005329**

(87) International publication number:
**WO 2023/204611 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.04.2022  KR 20220050155**

(71) Applicant: Samsung Electronics Co., Ltd
Suwon-si, Gyeonggi-do 16677 (KR)

(72) Inventors:
• **SHIM, Jaeyeon**
  Suwon-si, Gyeonggi-do 16677 (KR)
• **CHOI, Kyungjun**
  Suwon-si, Gyeonggi-do 16677 (KR)
• **KIM, Youngbum**
  Suwon-si, Gyeonggi-do 16677 (KR)

(74) Representative: **Nederlandsch Octrooibureau**
P.O. Box 29720
2502 LS The Hague (NL)

(54) **METHOD AND DEVICE FOR SCHEDULING MULTIPLE SHARED CHANNELS IN WIRELESS COMMUNICATION SYSTEM**

(57)     The present disclosure relates to a 5G or 6G communication system for supporting higher data transmission rates. The present disclosure provides a method and a device for scheduling multi-cell transmission via a single piece of DCI in a wireless communication system.

FIG. 20A

EP 4 496 413 A1

**Description**

[Technical Field]

The disclosure relates to operations of a terminal and a base station in a wireless communication system. Specifically, the disclosure relates to a method of interpreting downlink control information for scheduling multiple downlinks and multiple uplinks of a terminal, and a device capable of performing the method.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (Bandwidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

[Disclosure of Invention]

[Technical Problem]

Based on the discussion as described above, the disclosure provides a device and a method capable of effectively providing a service in a mobile communication system. Specifically, the disclosure provides a method and a device for performing multi-cell scheduling through downlink control information.

[Solution to Problem]

The disclosure for solving the above problem relates to a method performed by a terminal in a wireless communication system, the method including: receiving time domain resource allocation (TDRA) configuration information from a base station through higher layer signaling, wherein the TDRA configuration information includes multiple rows, and each of the rows includes one or more pieces of data channel scheduling information; receiving downlink control information for scheduling a data channel from the base station, wherein the downlink control information includes a cell index indicator and a TDRA field, and the TDRA field indicates one row among the multiple rows; and based on one or more pieces of data channel scheduling information included in the indicated row and one or more cell indexes indicated by the cell index indicator, transmitting or receiving a data channel in each of cells corresponding to the one or more cell indexes.

In addition, the disclosure relates to a method performed by a base station in a wireless communication system, the method including: transmitting time domain resource allocation (TDRA) configuration information to a terminal through higher layer signaling, wherein the TDRA configuration information includes multiple rows, and each of the rows includes one or more pieces of data channel scheduling information; transmitting downlink control information for scheduling a data channel to the terminal, wherein the downlink control information includes a cell index indicator and a TDRA field, and the TDRA field indicates one row among the multiple rows; and receiving or transmitting a data channel in each of cells corresponding to one or more cell indexes related to the cell index indicator, wherein the data channel corresponds to one or more pieces of data channel scheduling information included in the indicated row.

In addition, the disclosure relates to a terminal in a wireless communication system, the terminal including: a transceiver; and a controller configured to perform control to receive time domain resource allocation (TDRA) configuration information from a base station through higher layer signaling, wherein the TDRA configuration information includes multiple rows, and each of the rows includes one or more pieces of data channel scheduling information, receive downlink control information for scheduling a data channel from the base station, wherein the downlink control information includes a cell index indicator and a TDRA field, and the TDRA field indicates one row among the multiple rows, and based on one or more pieces of data channel scheduling information included in the indicated row and one or more cell indexes indicated by the cell index indicator, transmit or receive a data channel in each of cells corresponding to the one or more cell indexes.

In addition, the disclosure relates to a base station in a wireless communication system, the base station including: a transceiver; and a controller configured to perform control to transmit time domain resource allocation (TDRA) configuration information to a terminal through higher layer signaling, wherein the TDRA configuration information includes multiple rows, and each of the rows includes one or more pieces of data channel scheduling information, transmit downlink control information for scheduling a data channel to the terminal, wherein the downlink control information includes a cell index indicator and a TDRA field, and the TDRA field indicates one row among the multiple rows, and receive or transmit a data channel in each of cells corresponding to one or more cell indexes related to the cell index indicator, wherein the data channel corresponds to one or more pieces of data channel scheduling information included in the indicated row.

[Advantageous Effects of Invention]

According to a device and a method according to embodiments of the disclosure, data channel scheduling for multiple cells and data transmission and reception in multiple cells can be effectively performed through a single piece of DCI.

[Brief Description of Drawings]

FIG. 1 illustrates a basic structure of a time-frequency domain in a wireless communication system according to an embodiment of the disclosure;

FIG. 2 illustrates a structure of a frame, a subframe, and a slot in a wireless communication system according to an embodiment of the disclosure;

FIG. 3 illustrates an example of bandwidth part configuration in a wireless communication system according to an embodiment of the disclosure;

FIG. 4 illustrates an example of control resource set configuration of a downlink control channel in a wireless communication system according to an embodiment of the disclosure;

FIG. 5 illustrates a structure of a downlink control channel in a wireless communication system according to an embodiment of the disclosure;

FIG. 6 illustrates a diagram for explaining a method in which a base station and a UE transmit/receive data in consideration of a downlink data channel and a rate matching resource in a wireless communication system according to an embodiment of the disclosure;

FIG. 7 illustrates an example of frequency domain resource allocation with regard to a physical downlink shared channel (PDSCH) in a wireless communication system according to an embodiment of the disclosure;

FIG. 8 illustrates an example of time domain resource allocation with regard to a PDSCH in a wireless communication system according to an embodiment of the disclosure;

FIG. 9 illustrates an example of time domain resource allocation according to a subcarrier spacing with regard to a data channel and a control channel in a wireless communication system according to an embodiment of the disclosure;

FIG. 10 illustrates radio protocol structures of a base station and a UE in single cell, carrier aggregation, and dual connectivity situations according to an embodiment of the disclosure;

FIG. 11 illustrates an example of a scheme of scheduling multiple PDSCHs according to an embodiment of the disclosure;

FIG. 12 illustrates an example of a structure of DCI of single-PDSCH scheduling and multi-PDSCH scheduling;

FIG. 13 illustrates an example of a method of scheduling multi-cell multi-PDSCH according to an embodiment of the disclosure;

FIG. 14 illustrates an example of a multi-cell scheduling index application method according to an embodiment of the disclosure;

FIG. 15 illustrates an example of a multi-cell scheduling index application method according to an embodiment of the disclosure;

FIG. 16 illustrates an example of a DCI format for multi-cell multi-PDSCH according to an embodiment of the disclosure;

FIG. 17 illustrates an example of a DCI format for a PUCCH group for multi-cell multi-PDSCH according to an embodiment of the disclosure;

FIG. 18 illustrates an example of an HARQ-ACK operation according to a PUCCH group according to an embodiment of the disclosure;

FIG. 19 illustrates an example of a multi-cell scheduling indication method using a bitmap according to an embodiment of the disclosure;

FIG. 20A illustrates an example of an operation of a base station according to an embodiment of the disclosure; and

FIG. 20B illustrates an example of an operation of a terminal according to an embodiment of the disclosure.

FIG. 21 illustrates a structure of a UE according to an embodiment of the disclosure; and

FIG. 22 illustrates a structure of a base station according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" may refer to a radio link via which a base station transmits a signal to a terminal, and an "uplink (UL)" may refer to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

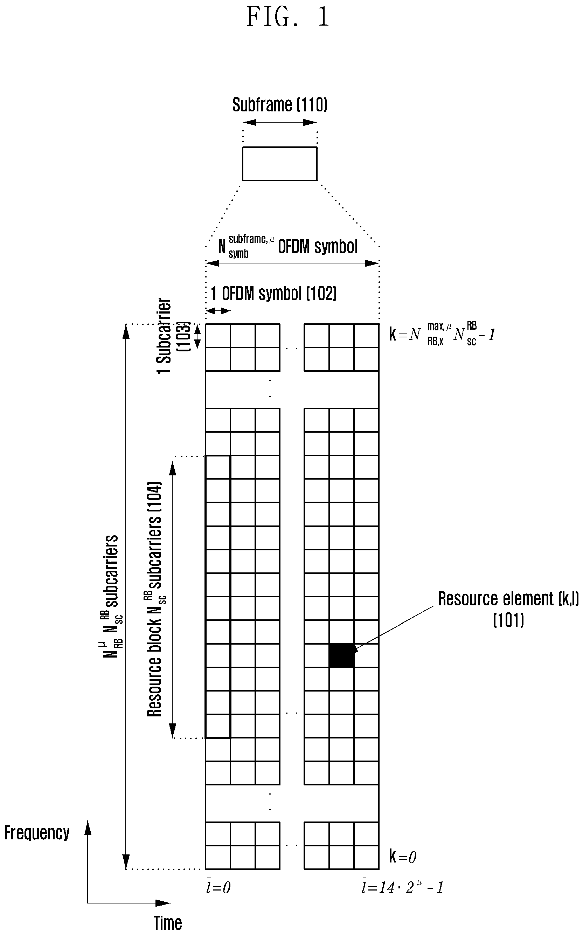

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

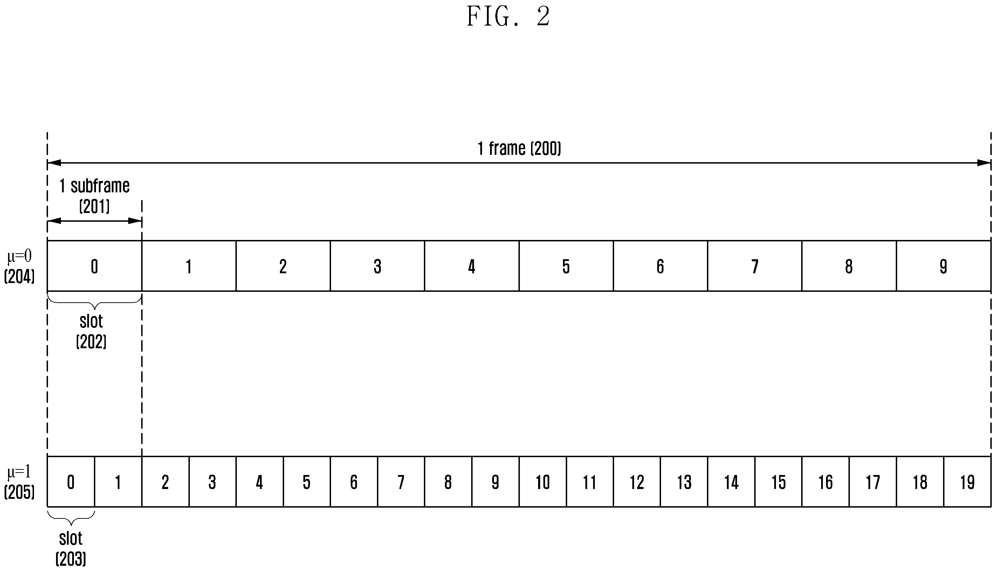

FIG. 2 illustrates a structure of a frame, a subframe, and a slot in a wireless communication system according to an embodiment of the disclosure.

FIG. 2 illustrates an example of a structure of a frame 200, a subframe 201, and a slot 202. One frame 200 may be defined as 10ms. One subframe 201 may be defined as 1 millisecond (ms), and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example in FIG. 2 illustrates a case in which the subcarrier spacing configuration value is μ=0 (204), and a case in which μ=1 (205). In the case of μ=0 (204), one subframe 201 may include one slot 202, and in the case of μ=1 (205), one subframe 201 may include two slots 203. That is, the number of slots per one subframe $N_{slot}^{sunframe,\mu}$ may differ depending on the subcarrier spacing configuration value $\mu$, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Hereinafter, bandwidth part (BWP) configuration in a 5G communication system will be described in detail with reference to the accompanying drawings.

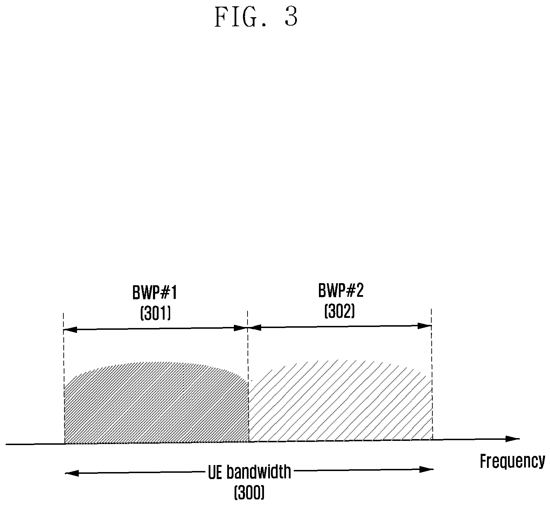

FIG. 3 illustrates an example of bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                              SEQUENCE {
    bwp-Id                              BWP-Id,
        (bandwidth part identifier)
    locationAndBandwidth                INTEGER (1..65536),
    (bandwidth part location)
    subcarrierSpacing                   ENUMERATED {n0, n1, n2, n3, n4, n5},
    (subcarrier spacing)
    cyclicPrefix                        ENUMERATED { extended }
    (cyclic prefix)
}
```

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by CORESET #0 acquired from the MIB is an initial bandwidth part for initial access. The ID of the initial bandwidth part may be considered to be 0.

The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example.

[Table 3]

| $\mu$ | NR Slot length (ms) | BWP switch delay $T_{BWP}$ (slots) | |
| | | Type 1[Note 1] | Type 2[Note 1] |
|---|---|---|---|
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+TBWP, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal/physical broadcast channel (SS/PBCH) blocks in 5G will be described.

An SS/PBCH block may refer to a physical layer channel block including a primary synchronization signal (PSS), a secondary synchronization signal (SSS), and a PBCH. Details thereof are as follows.

PSS: a signal which becomes a reference of downlink time/frequency synchronization, and provides partial information of a cell ID.

SSS: becomes a reference of downlink time/frequency synchronization, and provides remaining cell ID information not provided by the PSS. Additionally, the SSS may serve as a reference signal for PBCH demodulation of a PBCH.

PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.

SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in CORESET #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that CORESET #0 associated therewith is monitored.

In general, the UE may establish a radio link to a network through a random access procedure, based on synchronization with the network and system information, acquired in a cell search process for the corresponding cell. As the random access, a contention-based scheme or a contention-free scheme may be used. If the UE performs cell selection and cell reselection in the initial access step, the contention-based scheme may be used, for example, in the case of transitioning from an RRC_IDLE (RRC idle) state to an RRC_CONNECTED (RRC connected) state, and for other purposes. The contention-free scheme may be used in order to reconfigure uplink synchronization in the case where downlink data reaches, in the case of handover, or in the case of location measurement.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check is attached to the DCI message payload, and the CRC may be scrambled by a radio network temporary identifier (RNTI) corresponding to the identity of the UE. Different RNTIs may be used according to the purpose of the DCI message (for example, UE-specific data transmission, power control command, or random access response, or the like). That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

DCI format 0_0 may be used as fallback DCI for scheduling the PUSCH, and the CRC may be scrambled by a C-RNTI. DCI format 0_0 in which the CRC is scrambled by a C-RNTI may include the following pieces of information given in Table 4 below, for example.

[Table 4]

- Identifier for DCI formats - [1] bit

- Frequency domain resource assignment - $[\lceil log_2(N_{RB}^{UL,BWP}(N_{RB}^{UL,BWP}+1)/\ 2)\rceil$ ] bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/supplementary uplink (UL/SUL) indicator - 0 or 1 bit

DCI format 0_1 may be used as non-fallback DCI for scheduling the PUSCH, and the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    • For resource allocation type 0, $\lceil N_{RB}^{UL,BWP}/P \rceil$ bits

    • For resource allocation type 1, $\lceil log_2(N_{RB}^{UL,BWP}(N_{RB}^{UL,BWP}+1)/2)\rceil$ bits

- Time domain resource assignment - 1, 2, 3, or 4 bits
- Virtual resource block (VRB)-to-physical resource block (PRB) mapping - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.
    • 0 bit if only resource allocation type 0 is configured;
    • 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two HARQ-ACK sub-codebooks;
    • 0 bit otherwise.
- TPC command for scheduled PUSCH - 2 bits

- SRS resource indicator - $\left\lceil log_2\left(\sum_{k=1}^{L_{max}\Sigma}\binom{N_{SRS}}{k}()\right)\ \right\rceil$ or $\lceil log_2(N_{SRS})\rceil$ bits

(continued)

$$\cdot \left\lceil log_2 \left( \sum_{k=1}^{L_{max}\Sigma} \binom{N_{\text{SRS}}}{k} 0 \right) \quad \right\rceil$$ bits for non-codebook based PUSCH transmission;

$$\cdot \left\lceil log_2(N_{\text{SRS}}) \right\rceil$$ bits for codebook based PUSCH transmission.

- Precoding information and number of layers - up to 6 bits
- Antenna ports - up to 5 bits
- SRS request - 2 bits
- CSI request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling the PDSCH, and the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment - $\cdot \left\lceil \left\lceil log_2(N_{\text{RB}}^{\text{DL,BWP}}(N_{\text{RB}}^{\text{DL,BWP}} + 1)/2) \right\rceil \quad \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling the PDSCH, and the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

• For resource allocation type 0, $\left\lceil N_{\text{RB}}^{\text{DL,BWP}}/P \right\rceil$ bits
• For resource allocation type 1,

$$\left\lceil log_2(N_{\text{RB}}^{\text{DL,BWP}}(N_{\text{RB}}^{\text{DL,BWP}} + 1)/2) \right\rceil$$ bits

- Time domain resource assignment -1, 2, 3, or 4 bits
- VRB-to-PRB mapping - 0 or 1 bit, only for resource allocation type 1.

• 0 bit if only resource allocation type 0 is configured;
• 1 bit otherwise.

(continued)

- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- Code block group (CBG) transmission information - 0,
2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

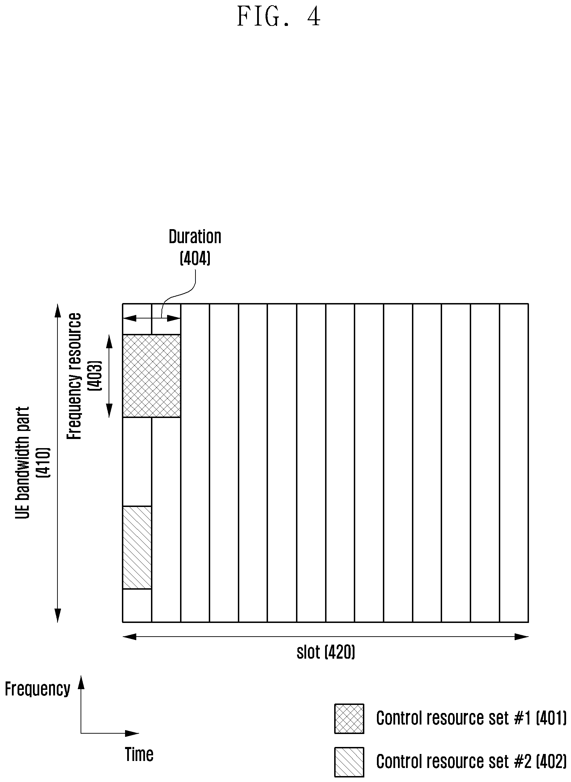

FIG. 4 illustrates an example of a CORESET used to transmit a downlink control channel in a 5G wireless communication system. FIG. 4 illustrates an example in which a UE bandwidth part 410 is configured along the frequency axis, and two CORESETs (CORESET #1 401 and CORESET #2 402) are configured within one slot 420 along the time axis. The CORESETs 401 and 402 may be configured in a specific frequency resource 410 within the entire UE bandwidth part 403 along the frequency axis. One or multiple OFDM symbols may be configured along the time axis, and this may be defined as a control resource set duration 404. Referring to the example illustrated in FIG. 4, CORESET #1 401 is configured to have a CORESET duration of two symbols, and CORESET #2 402 is configured to have a CORESET duration of one symbol.

A control resource set in 5G described above may be configured for a UE by a base station through upper layer signaling (for example, system information, master information block (MIB), radio resource control (RRC) signaling). The description that a CORESET is configured for a UE means that information such as the identity of a CORESET, the frequency location of a CORESET, and the symbol duration of a CORESET is provided. For example, the CORESET configuration information may include the following pieces of information: given in Table 8 below.

[Table 8]

```
ControlResourceSet ::=
    SEQUENCE {
    -- Corresponds to L1 parameter 'CORESET-ID'


    controlResourceSetId                    ControlResourceSetId,
        (control resource set identity))
    frequencyDomainResources              BIT      STRING
(SIZE (45)),
```

```
            (frequency domain resource allocation information)
            duration                                 INTEGER
(1..maxCoReSetDuration),
            (time domain resource allocation information)
            cce-REG-MappingType
CHOICE {
            (CCE-to-REG mapping type)
                interleaved                          SEQUENCE {

                reg-BundleSize                       ENUMERATED
{n2, n3, n6},
                    (REG bundle size)

                precoderGranularity                  ENUMERATED
{sameAsREG-bundle, allContiguousRBs},

                interleaverSize                      ENUMERATED
{n2, n3, n6}
                (interleaver size)

                shiftIndex
                INTEGER(0..maxNrofPhysicalResourceBlocks-1)
            OPTIONAL
                (interleaver shift)
                },
            nonInterleaved
            NULL
            },
            tci-StatesPDCCH                          SEQUENCE(SIZE
(1..maxNrofTCI-StatesPDCCH)) OF TCI-StateId
            OPTIONAL,
            (QCL configuration information)
```

| tci-PresentInDCI | ENUMERATED |
|---|---|
| {enabled} | |
| OPTIONAL,    -- Need S | |
| } | |

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding CORESET.

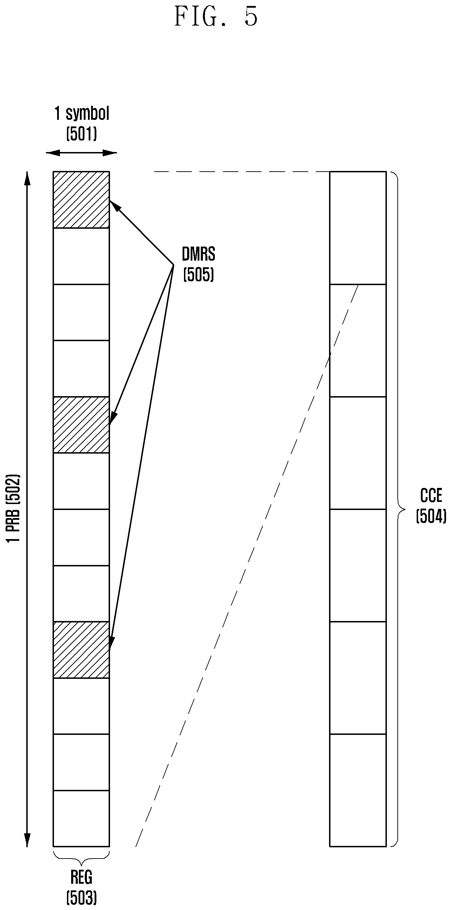

FIG. 5 illustrates an example of a basic unit of time and frequency resources constituting a downlink control channel available in a 5G system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element %n as illustrated in FIG. 5, one CCE %n may include multiple REGs %n. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the CORESET are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. Referring to FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding.

The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured ALs. Search spaces may be classified into common search spaces and UE-specific search spaces. A group of UEs or all UEs may search a common search space of the PDCCH in order to perform dynamic scheduling regarding system information. For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a predetermined set of CCEs. Scheduling allocation information regarding a UE-specific PDSCH or PUSCH may be received by investigating the UE-specific search space of the PDCCH. The UE-specific search space may be defined UE-specifically as a function of various system parameters and the identity of the UE.

In 5G, a parameter for a search space regarding a PDCCH may be configured for the UE by the base station through upper layer signaling (for example, SIB, MIB, RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a CORESET index for monitoring the search space, and the like. For example, the search space configuration information may include the following pieces of information: given in Table 9 below.

[Table 9]

```
SearchSpace ::=
    SEQUENCE {
    -- Identity of the search space. SearchSpaceId = 0 identifies the SearchSpace
configured via PBCH (MIB) or ServingCellConfigCommon.
    searchSpaceId
    SearchSpaceId,
```

```
                                     (search space identity)
                    controlResourceSetId
                    ControlResourceSetId,
                                     (control resource set identity)
                    monitoringSlotPeriodicityAndOffset          CHOICE {
                                     (monitoring slot level perodicity)
                            sl1
                    NULL,
                            sl2
                    INTEGER (0..1),
                            sl4
                    INTEGER (0..3),
                            sl5
                    INTEGER (0..4),
                            sl8
                    INTEGER (0..7),
                            sl10
                    INTEGER (0..9),
                            sl16
                    INTEGER (0..15),
                            sl20
                    INTEGER (0..19)
                    }
                                                                OPTIONAL,
                    duration(monitoring duration)            INTEGER (2..2559)
                    monitoringSymbolsWithinSlot                      BIT
STRING (SIZE (14))
                    OPTIONAL,
                                     (monitoring symbols within slot)
                    nrofCandidates                           SEQUENCE {
                                     (number of PDCCH candidate groups for each aggregation level)
                            aggregationLevel1                ENUMERATED {n0,
n1, n2, n3, n4, n5, n6, n8},
```

```
                aggregationLevel2                    ENUMERATED  {n0,
n1, n2, n3, n4, n5, n6, n8},
                aggregationLevel4                    ENUMERATED  {n0,
n1, n2, n3, n4, n5, n6, n8},
                aggregationLevel8                    ENUMERATED  {n0,
n1, n2, n3, n4, n5, n6, n8},
                aggregationLevel16
ENUMERATED {n0, n1, n2, n3, n4, n5, n6, n8}
            },
        searchSpaceType                    CHOICE {
        (search space type)
                -- Configures this search space as common search space (CSS) and
DCI formats to monitor.
        common                          SEQUENCE {
        (common search space)
            }
        ue-Specific                       SEQUENCE {
        (UE-specific search space)
            -- Indicates whether the UE monitors in this USS for DCI formats 0-0 and 1-0
or for formats 0-1 and 1-1.
        formats                           ENUMERATED
{formats0-0-And-1-0, formats0-1-And-1-1},
            ...
        }
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs given below may be monitored in a UE-specific search space. Obviously, the example given below is not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI
Enumerated RNTIs may follow the definition and usage given below
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

L: aggregation level
$n_{CI}$: carrier index
$N_{CCE,p}$: total number of CCEs existing in control resource set $p$

$n_{s,f}^{\mu}$ : slot index

$M_{s,max}^{(L)}$ : number of PDCCH candidates at aggregation level L

$m_{s,n_{CI}} = 0, \ldots, M_{s,max}^{(L)} -1$ : PDCCH candidate index at aggregation level L

$i = 0, \ldots, L -1$

$Y_{p,n_{s,f}^{\mu}} = \left( A_p \cdot Y_{p,n_{s,f}^{\mu}-1} \right) \bmod D$ , $Y_{p,-1} = n_{RNTI} \neq 0$ , $A_p =$
39827 *for pmod3 = 0* , $A_p$ = 39829 *for pmod3 = 1* , $A_p$ = 39839 *for pmod3 = 2*, D = 65537
$n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ accordingly. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

The base station may transmit channel A after mapping the same only to remaining resource domains other than resource C (area overlapping resource B) among the entire resource A which is to be used to transmit symbol sequence A to the UE. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may send symbol sequence A after successively mapping the same to remaining resources {resource#1, resource#2, resource#4} other than {resource#3} (corresponding to resource C) among resource A. Consequently, the base station may transmit symbol sequence {symbol# 1, symbol#2, symbol#3} after mapping the same to {resource# 1, resource#2, resource#4}, respectively.

The UE may assess resource A and resource B from scheduling information regarding symbol sequence A from the base station, thereby assessing resource C. The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource# 1, resource#2, resource#4} other than {resource#3} (corresponding to resource C) among resource A. Consequently, the UE may perform a series of following receiving operations based on an assumption that symbol sequence {symbol# 1, symbol#2, symbol#3} has been transmitted after being mapped to {resource#1, resource#2, resource#4}, respectively.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may map symbol sequence {symbol# 1, symbol#2, symbol#3, symbol#4} to resource A {resourced 1, resource#2, resource#3, resource#4}, respectively, may transmit only symbol sequence {symbol# 1, symbol#2, symbol#4} corresponding to remaining resources {resource#!, resource#2, resource#4} other than {resource#3} (corresponding to resource C) among resource A, and may not transmit {symbol#3} mapped to {resource#3} (corresponding to resource C). Consequently, the base station may transmit symbol sequence {symbol# 1, symbol#2, symbol#4} after mapping the same to {resource# 1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol# 1, symbol#2, symbol#3, symbol4} is mapped to resource A {resource#1, resource#2, resource#3, resource#4}, respectively, but {symbol#3} mapped to { resource#3 } (corresponding to resource C) is not transmitted, and based on the assumption that symbol sequence {symbol# 1, symbol#2, symbol#4} corresponding to remaining resources {resource# 1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol# 1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

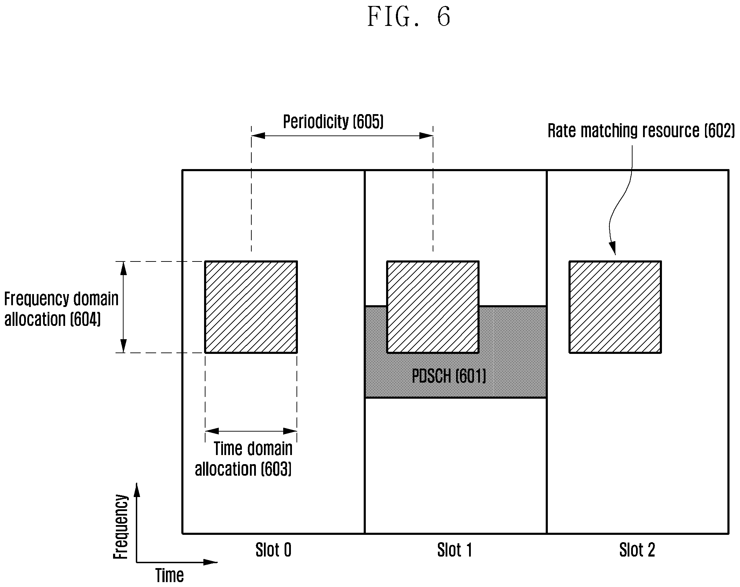

FIG. 6 is a diagram for explaining a method in which a base station and a UE transmit/receive data in consideration of a downlink data channel and a rate matching resource.

FIG. 6 illustrates a downlink data channel (PDSCH) 601 and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station imay ndicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

RB symbol level

The UE may have a maximum of four RateMatchPatterns configured per each bandwidth part through upper layer signaling, and one RateMatchPattern may include the following contents.

may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.

may include a resource area corresponding to a time domain pattern configured by time and frequency domain resource areas configured by a CORESET inside a bandwidth part and a search space configuration in which corresponding resource areas are repeated.

RE level

The UE may have the following contents configured through upper layer signaling.

configuration information (Ite-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. For coexistence between LTE and NR, NR provides an NR UE with a function for configuring the pattern of a CRS of LTE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-transmission and reception point (TRP) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 11 shows a ServingCellConfig IE including the CRS patterns, and Table 12 shows a RateMatchPatternLTE-CRS IE including at least one parameter regarding CRS patterns.

[Table 11]

```
ServingCellConfig ::=                    SEQUENCE {

    ...,
    [[
    lte-CRS-ToMatchAround                              SetupRelease
{                    RateMatchPatternLTE-CRS                    }
OPTIONAL,    -- Need M
    rateMatchPatternToAddModList              SEQUENCE    (SIZE
(1..maxNrofRateMatchPatterns)) OF  RateMatchPattern        OPTIONAL,    --
Need N
    rateMatchPatternToReleaseList              SEQUENCE    (SIZE
(1..maxNrofRateMatchPatterns)) OF  RateMatchPatternId      OPTIONAL,    --
Need N
    downlinkChannelBW-PerSCS-List        SEQUENCE (SIZE (1..maxSCSs))
OF SCS-SpecificCarrier                    OPTIONAL      -- Need S
    ]],
    [[
    supplementaryUplinkRelease              ENUMERATED  {true}
OPTIONAL,    -- Need N
    tdd-UL-DL-ConfigurationDedicated-IAB-MT-r16              TDD-UL-DL-
ConfigDedicated-IAB-MT-r16                    OPTIONAL,    --
Cond TDD_IAB
    dormantBWP-Config-r16              SetupRelease { DormantBWP-
Config-r16 }                    OPTIONAL,    -- Need M
```

```
        ca-SlotOffset-r16                    CHOICE {
            refSCS15kHz                              INTEGER (-2..2),
            refSCS30KHz                    INTEGER (-5..5),
            refSCS60KHz                              INTEGER (-10..10),
            refSCS120KHz                             INTEGER (-20..20)
        }
OPTIONAL,      -- Cond AsyncCA
        channelAccessConfig-r16                               SetupRelease
{ ChannelAccessConfig-r16 }                               OPTIONAL,
-- Need M
        intraCellGuardBandsDL-List-r16     SEQUENCE (SIZE (1..maxSCSs)) OF
IntraCellGuardBandsPerSCS-r16           OPTIONAL,    -- Need S
        intraCellGuardBandsUL-List-r16     SEQUENCE (SIZE (1..maxSCSs)) OF
IntraCellGuardBandsPerSCS-r16           OPTIONAL,    -- Need S
        csi-RS-ValidationWith-DCI-r16              ENUMERATED   {enabled}
OPTIONAL,      -- Need R
        lte-CRS-PatternList1-r16           SetupRelease { LTE-CRS-PatternList-
r16 }                                   OPTIONAL,    -- Need M
        lte-CRS-PatternList2-r16           SetupRelease { LTE-CRS-PatternList-
r16 }                                   OPTIONAL,    -- Need M
        crs-RateMatch-PerCORESETPoolIndex-r16      ENUMERATED   {enabled}
OPTIONAL,      -- Need R
        ...
        ]]
}
```

[Table 12]

- RateMatchPatternLTE-CRS

The IE RateMatchPatternLTE-CRS is used to configure a pattern to rate match around LTE CRS. See TS 38.214 [19], clause 5.1.4.2.

RateMatchPatternLTE-CRS information element

-- ASN1START

-- TAG-RATEMATCHPATTERNLTE-CRS-START


RateMatchPatternLTE-CRS ::=          SEQUENCE {
    carrierFreqDL                         INTEGER (0..16383),
    carrierBandwidthDL                    ENUMERATED {n6, n15, n25, n50, n75,
n100, spare2, spare1},
    mbsfn-SubframeConfigList                   EUTRA-MBSFN-SubframeConfigList
OPTIONAL,       -- Need M
    nrofCRS-Ports                         ENUMERATED {n1, n2, n4},
    v-Shift                               ENUMERATED {n0, n1, n2, n3, n4, n5}
}


LTE-CRS-PatternList-r16 ::=          SEQUENCE (SIZE (1..maxLTE-CRS-Patterns-
r16)) OF RateMatchPatternLTE-CRS


-- TAG-RATEMATCHPATTERNLTE-CRS-STOP

-- ASN1STOP


RateMatchPatternLTE-CRS 필드 descriptions

- carrierBandwidthDL

BW of the LTE carrier in number of PRBs (see TS 38.214 [19], clause 5.1.4.2).

- carrierFreqDL

Center of the LTE carrier (see TS 38.214 [19], clause 5.1.4.2).

- mbsfn-SubframeConfigList

LTE MBSFN subframe configuration (see TS 38.214 [19], clause 5.1.4.2).

- nrofCRS-Ports

Number of LTE CRS antenna port to rate-match around (see TS 38.214 [19], clause 5.1.4.2).

- v-Shift

> Shifting value v-shift in LTE to rate match around LTE CRS (see TS 38.214 [19], clause 5.1.4.2).

[PDSCH/PUSCH: regarding time resource allocation]

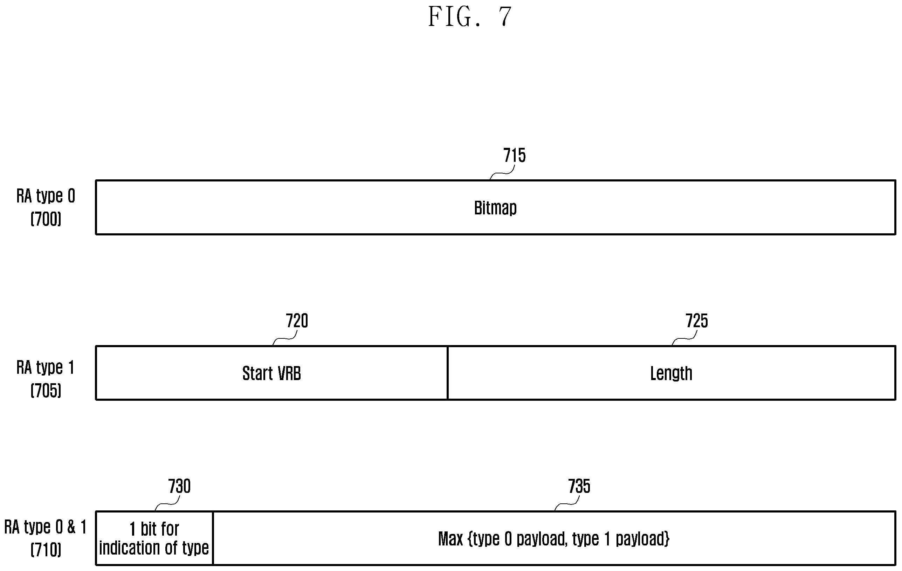

FIG. 7 illustrates an example of frequency domain resource allocation with regard to a PDSCH in a wireless communication system according to an embodiment of the disclosure.

FIG. 7 illustrates three frequency domain resource allocation methods of type 0 700, type 1 705, and dynamic switch 710 which can be configured through an upper layer in an NR wireless communication system.

Referring to FIG. 7, in the case 700 in which a UE is configured to use only resource type 0 through upper layer signaling, partial downlink control information (DCI) for allocating a PDSCH to the UE include a bitmap including NRBG bits. The conditions for this will be described later. As used herein, NRBG refers to the number of resource block groups (RBGs) determined according to the BWP size allocated by a BWP indicator and upper layer parameter rbg-Size, as in Table 13 below, and data is transmitted in RBGs indicated as "1" by the bitmap.

[Table 13]

| Bandwidth Part Size | Configuration 1 | Configuration 2 |
|---|---|---|
| 1-36 | 2 | 2 |
| 27-72 | 4 | 8 |
| 73-144 | 8 | 16 |
| 145-275 | 16 | 16 |

In the case 705 in which the UE is configured to use only resource type 1 through upper layer signaling, partial DCI includes frequency domain resource allocation information including $[log_2(N_{RB}^{DL,BWP}(N_{RB}^{DL,BWP} + 1)/2]$ bits. The conditions for this will be described again later. The base station may thereby configure a starting VRB 720 and the length 725 of a frequency domain resource allocated continuously therefrom.

In the case 710 in which the UE is configured to use both resource type 0 and resource type 1 through upper layer signaling, partial DCI for allocating a PDSCH to the corresponding UE includes frequency domain resource allocation information including as many bits as the larger value 735 between the payload 715 for configuring resource type 0 and the payload 720 and 725 for configuring resource type 1. The conditions for this will be described again later. One bit may be added to the foremost part (MSB) of the frequency domain resource allocation information inside the DCI. If the bit has the value of "0", use of resource type 0 may be indicated, and if the bit has the value of " 1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 14 or Table 15 below may be transmitted from the base station to the UE.

[Table 14]

```
PDSCH-TimeDomainResourceAllocationList information element
PDSCH-TimeDomainResourceAllocationList ::=    SEQUENCE  (SIZE(1..maxNrofDL-
Allocations)) OF PDSCH-TimeDomainResourceAllocation


PDSCH-TimeDomainResourceAllocation ::=    SEQUENCE {
    k0                                                      INTEGER(0..32)
OPTIONAL,     -- Need S
        (PDCCH-to-PDSCH timing, slot unit)
mappingType                              ENUMERATED {typeA, typeB},
        (PDSCH mapping type)
startSymbolAndLength                      INTEGER (0..127)
(Start symbol and length of PDSCH)
}
```

[Table 15]

```
PUSCH-TimeDomainResourceAllocation information element
PUSCH-TimeDomainResourceAllocationList ::=    SEQUENCE      (SIZE(1..maxNrofUL-
Allocations)) OF PUSCH-TimeDomainResourceAllocation


PUSCH-TimeDomainResourceAllocation ::=    SEQUENCE {
    k2                                                      INTEGER(0..32)
OPTIONAL,     -- Need S
        (PDCCH-to-PUSCH timing, slot unit)
        mappingType                              ENUMERATED {typeA, typeB},
        (PUSCH mapping type)
        startSymbolAndLength                      INTEGER (0..127)
        (Start symbol and length of PUSCH)
}
```

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

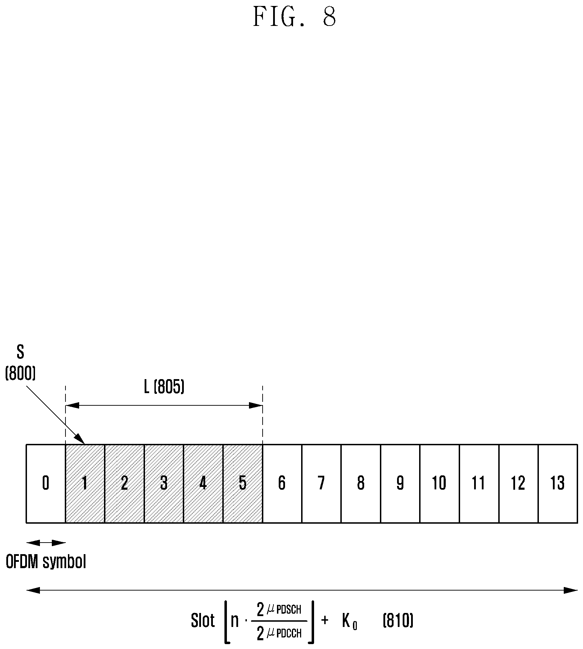

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 800 and length 805 within one slot dynamically indicated through DCI.

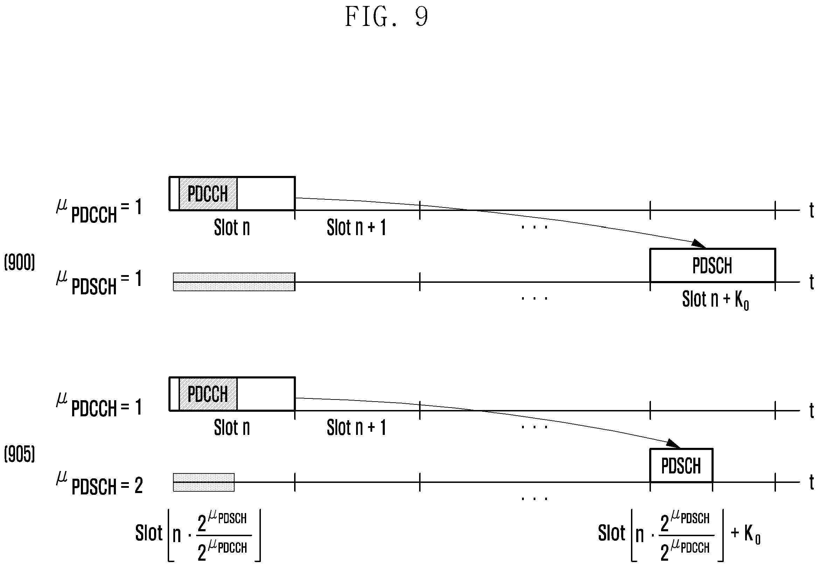

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing 900 ($\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings 905 ($_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through upper signaling. If PUSCH transmission is operated by a configured grant, parameters applied to the PUSCH transmission are applied through configuredGrantConfig (upper signaling) in Table 16 except for dataScramblingIdentityPUSCH, txConfig, codebookSubset, maxRank, and scaling of UCI-OnPUSCH, which are provided by pusch-Config (upper signaling) in Table 17. If provided with transformPrecoder inside configuredGrantConfig (upper signaling) in Table 16, the UE applies tp-pi2BPSK inside pusch-Config in Table 17 to PUSCH transmission operated by a configured grant.

[Table 16]

```
ConfiguredGrantConfig ::=                SEQUENCE {
        frequencyHopping                         ENUMERATED {intraSlot, interSlot}
OPTIONAL,     -- Need S,
        cg-DMRS-Configuration            DMRS-UplinkConfig,
        mcs-Table                                ENUMERATED {qam256,
qam64LowSE}                                      OPTIONAL,     -- Need
S
        mcs-TableTransformPrecoder       ENUMERATED {qam256, qam64LowSE}
OPTIONAL,     -- Need S
        uci-OnPUSCH                              SetupRelease { CG-UCI-OnPUSCH }
OPTIONAL,     -- Need M
        resourceAllocation               ENUMERATED { resourceAllocationType0,
resourceAllocationType1, dynamicSwitch },
        rbg-Size                                 ENUMERATED {config2}
OPTIONAL,     -- Need S
        powerControlLoopToUse            ENUMERATED {n0, n1},
        p0-PUSCH-Alpha                   P0-PUSCH-AlphaSetId,
        transformPrecoder                        ENUMERATED {enabled, disabled}
OPTIONAL,     -- Need S
        nrofHARQ-Processes               INTEGER(1..16),
        repK                             ENUMERATED {n1, n2, n4, n8},
        repK-RV                          ENUMERATED {s1-0231, s2-0303, s3-
0000}                                    OPTIONAL,     -- Need R
        periodicity                      ENUMERATED {
                                                 sym2,     sym7,     sym1x14,
sym2x14, sym4x14, sym5x14, sym8x14, sym10x14, sym16x14, sym20x14,
                                                 sym32x14,         sym40x14,
sym64x14, sym80x14, sym128x14, sym160x14, sym256x14, sym320x14, sym512x14,
                                                 sym640x14,        sym1024x14,
sym1280x14, sym2560x14, sym5120x14,
```

```
                                                            sym6,    sym1x12,    sym2x12,
sym4x12, sym5x12, sym8x12, sym10x12, sym16x12, sym20x12, sym32x12,
                                                            sym40x12,            sym64x12,
sym80x12, sym128x12, sym160x12, sym256x12, sym320x12, sym512x12, sym640x12,
                                                            sym1280x12, sym2560x12
        },
        configuredGrantTimer                                INTEGER   (1..64)
OPTIONAL,    -- Need R
        rrc-ConfiguredUplinkGrant           SEQUENCE {
            timeDomainOffset                    INTEGER (0..5119),
            timeDomainAllocation                INTEGER    (0..15),
            frequencyDomainAllocation           BIT STRING (SIZE(18)),
            antennaPort                         INTEGER (0..31),
            dmrs-SeqInitialization                          INTEGER   (0..1)
OPTIONAL,    -- Need R
            precodingAndNumberOfLayers          INTEGER (0..63),
            srs-ResourceIndicator                           INTEGER   (0..15)
OPTIONAL,    -- Need R
            mcsAndTBS                               INTEGER (0..31),
            frequencyHoppingOffset                              INTEGER   (1..
maxNrofPhysicalResourceBlocks-1)            OPTIONAL,    -- Need R
            pathlossReferenceIndex              INTEGER (0..maxNrofPUSCH-
PathlossReferenceRSs-1),
            ...
        }
OPTIONAL,    -- Need R
        ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 17, which is upper signaling, is "codebook" or "nonCodebook".

As described above, PUSCH transmission may be dynamically scheduled through DCI format 0_0 or 0_1, and may be configured semi-statically by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 17, the UE does not expect scheduling through DCI format 0_1.

[Table 17]

| | |
|---|---|
| PUSCH-Config ::= | SEQUENCE { |
| dataScramblingIdentityPUSCH | INTEGER (0..1023) OPTIONAL, -- Need S |
| txConfig | ENUMERATED {codebook, nonCodebook} OPTIONAL, -- Need S |
| dmrs-UplinkForPUSCH-MappingTypeA | SetupRelease { DMRS-UplinkConfig } OPTIONAL, -- Need M |
| dmrs-UplinkForPUSCH-MappingTypeB | SetupRelease { DMRS-UplinkConfig } OPTIONAL, -- Need M |
| pusch-PowerControl | PUSCH-PowerControl OPTIONAL, -- Need M |
| frequencyHopping | ENUMERATED {intraSlot, interSlot} OPTIONAL, -- Need S |
| frequencyHoppingOffsetLists | SEQUENCE (SIZE (1..4)) OF INTEGER (1.. maxNrofPhysicalResourceBlocks-1) OPTIONAL, -- Need M |
| resourceAllocation | ENUMERATED { resourceAllocationType0, resourceAllocationType1, dynamicSwitch}, |

```
        pusch-TimeDomainAllocationList                    SetupRelease { PUSCH-
TimeDomainResourceAllocationList }              OPTIONAL,    -- Need M
        pusch-AggregationFactor                    ENUMERATED { n2, n4, n8 }
OPTIONAL,    -- Need S
        mcs-Table                                         ENUMERATED {qam256,
qam64LowSE}                                    OPTIONAL,    -- Need S
        mcs-TableTransformPrecoder                     ENUMERATED {qam256,
qam64LowSE}                                    OPTIONAL,    -- Need S
        transformPrecoder                  ENUMERATED {enabled, disabled}
OPTIONAL,    -- Need S
        codebookSubset                                          ENUMERATED
{fullyAndPartialAndNonCoherent, partialAndNonCoherent,nonCoherent}


OPTIONAL, -- Cond codebookBased
        maxRank                                           INTEGER  (1..4)
OPTIONAL, -- Cond codebookBased
        rbg-Size                                  ENUMERATED { config2}
OPTIONAL, -- Need S
        uci-OnPUSCH                              SetupRelease { UCI-OnPUSCH}
OPTIONAL, -- Need M
        tp-pi2BPSK                              ENUMERATED {enabled}
OPTIONAL, -- Need S
        ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be indicated through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. The TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI is used to indicate a precoder to be applied in the configured SRS resource. If multiple SRS resources are configured for the UE, the TPMI is used to indicate a precoder to be applied in an SRS resource indicated through the SRI.

The precoder to be used for PUSCH transmission may be selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "noncoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and instructs the UE to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Hereinafter, non-codebook-based PUSCH transmission will be described. The non- codebook-based PUSCH transmission may be dynamically scheduled through DCI format 0_0 or 0_1, and may be operated semi-statically configured by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo, which is upper signaling regarding the SRS resource, and associatedCSI-RS inside SRS-ResourceSet, which is upper signaling, will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI may indicate an index that may express one SRS resource or a combination of multiple SRS resources. The number of SRS resources indicated by the SRI transmitted by the base station may be the number of transmission layers of the PUSCH, and the UE transmits the PUSCH by applying the precoder applied to SRS resource transmission to each layer.

[Regarding CA/DC]

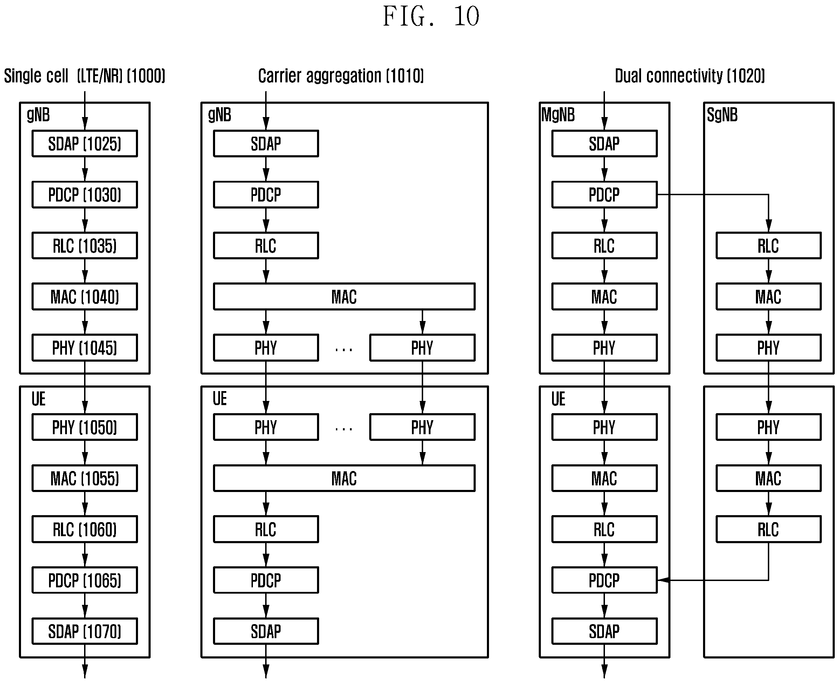

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) 1025 or 1070, an NR packet data convergence protocol (PDCP) 1030 or 1065, an NR radio link control (RLC) 1035 or 1060, and an NR medium access controls (MAC) 1040 or 1055, on each of UE and NR base station sides.

The main functions of the NR SDAP 1025 or 1070 may include some of functions below.

> Transfer of user plane data
> Mapping between a QoS flow and a DRB for both DL and UL
> Marking QoS flow ID in both DL and UL packets
> Reflective QoS flow to DRB mapping for the UL SDAP PDUs

The main functions of the NR PDCP 1030 or 1065 may include some of the following functions: below.

> Header compression and decompression: ROHC only
> Transfer of user data
> In-sequence delivery of upper layer PDUs
> Out-of-sequence delivery of upper layer PDUs
> PDCP PDU reordering for reception
> Duplicate detection of lower layer SDUs
> Retransmission of PDCP SDUs
> Ciphering and deciphering
> Timer-based SDU discard in uplink

The main functions of the NR RLC 1035 or 1060 may include some of the following functions: below.

> Transfer of upper layer PDUs
> In-sequence delivery of upper layer PDUs
> Out-of-sequence delivery of upper layer PDUs
> Error Correction through ARQ
> Concatenation, segmentation and reassembly of RLC SDUs
> Re-segmentation of RLC data PDUs
> Reordering of RLC data PDUs
> Duplicate detection
> Protocol error detection
> RLC SDU discard
> RLC re-establishment

The NR MAC 1040 or 1055 may be connected to multiple NR RLC layer devices configured in one UE, and the main functions of the NR MAC may include some of functions below.

> Mapping between logical channels and transport channels
> Multiplexing/demultiplexing of MAC SDUs
> Scheduling information reporting
> Error correction through HARQ
> Priority handling between logical channels of one UE
> Priority handling between UEs by means of dynamic scheduling
> MBMS service identification

Transport format selection
Padding

An NR PHY layer 1045 or 1050 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. As an example, assuming that the base station transmits data to the UE based on a single carrier (or cell), the base station and the UE use a protocol structure having a single structure with regard to each layer, such as 1000. On the other hand, assuming that the base station transmits data to the UE, based on carrier aggregation (CA) which uses multiple carriers in a single TRP, the base station and the UE use a protocol structure which has a single structure up to the RLC, such as 1010, but multiplexes the PHY layer through a MAC layer. As another example, assuming that the base station transmits data to the UE based on dual connectivity (DC) which uses multiple carriers in multiple TRPs, the base station and the UE use a protocol structure which has a single structure up to the RLC but multiplexes the PHY layer through a MAC layer, such as 1020.

Hereinafter, embodiments of the disclosure will be described in detail in conjunction with the accompanying drawings. The contents of the disclosure may be applied to FDD and TDD systems. As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

MIB
SIB or SIB X (X=1, 2,...)
RRC
MAC CE

In addition, L1 signaling may refer to signaling corresponding to at least one signaling method among signaling methods using the following physical layer channels or signaling, or a combination of one or more thereof.

PDCCH
DCI
UE-specific DCI
Group common DCI
Common DCI

Scheduling DCI (for example, DCI used for the purpose of scheduling downlink or uplink data)
Non-scheduling DCI (for example, DCI not used for the purpose of scheduling downlink or uplink data)
PUCCH
Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

[Related to Single-cell Multi-PDSCH/PUSCH scheduling]

A new scheduling method has been introduced in Rel-17 NR of 3GPP. The new scheduling method is described below. The new scheduling method introduced in Rel-17 NR includes "multi-PDSCH scheduling" in which one piece of DCI may schedule one or multiple PDSCHs, and "multi-PUSCH scheduling" in which one piece of DCI may schedule one or multiple PUSCHs. In multiple PDSCHs or multiple PUSCHs, each PDSCH or each PUSCH delivers a different transport block. By using the multi-PDSCH scheduling and multi-PUSCH scheduling, a base station does not transmit multiple pieces of DCI for scheduling multiple PDSCHs or multiple PUSCHs, respectively, in a UE, and thus overhead of a downlink control channel may be reduced. However, one piece of DCI for the multi-PDSCH scheduling and multi-PUSCH scheduling is required to include scheduling information for multiple PDSCHs or multiple PUSCHs, and thus the size of the DCI may be increased. To this end, when multi-PDSCH scheduling and multi-PUSCH scheduling are configured for the UE, a method for preferably interpreting DCI by a UE is needed.

The disclosure has described multi-PDSCH scheduling, but the idea of the technology proposed in the disclosure may be used in multi-PUSCH scheduling.

The base station may configure multi-PDSCH scheduling for the UE. For example, the base station may explicitly configure multi-PDSCH scheduling for the UE by using a higher layer signal. Alternatively, the base station may implicitly configure multi-PDSCH scheduling for the UE by using a higher layer signal. For example, an explicit parameter indicating multi-PDSCH scheduling may be transmitted from the base station to the UE through an RRC signal (explicit indication), or the UE may understand that multi-PDSCH transmission has been implicitly configured when multiple pieces of scheduling information are configured in one row of a TDRA table for a PDSCH configured through RRC signaling.

The base station may configure a TDRA table for the UE through a higher layer signal for multi-PDSCH scheduling as follows. The TDRA table may include one or multiple rows. The number of rows may be configured to be up to a maximum of $N_{row}$, and each of the rows corresponds to a unique index. The unique index may be one value of 1, 2, ..., $N_{row}$. Here, $N_{row}$ may preferably be 16. One or multiple pieces of scheduling information may be configured in each row. When one piece of scheduling information is configured in one row, the row schedules one PDSCH. That is, when the row is indicated, it may be understood that single-PDSCH scheduling has been indicated. When multiple pieces of scheduling information are configured in one row, the multiple pieces of scheduling information schedules multiple PDSCHs in order. That is, when the row is indicated, the UE may understand that multi-PDSCH scheduling has been indicated.

The scheduling information may be in the form of (K0, SLIV, and PDSCH mapping type). That is, when multi-PDSCH scheduling is indicated, a row may include multiple (K0, SLIV, and PDSCH mapping types). Among them, an N-th (K0, SLIV, and PDSCH mapping type) is scheduling information of an N-th PDSCH. For reference, one row may include up to $N_{pdsch}$ (K0, SLIV, and PDSCH mapping types). Here, $N_{pdsch}$ may preferably be 8 ($N_{pdsch}$=8). That is, one row may schedule up to 8 PDSCHs.

Here, K0 indicates a slot in which a PDSCH is scheduled, and represents a slot difference (offset) between a slot in which a PDCCH which transmits DCI for scheduling the PDSCH is received and a slot in which a PDSCH is scheduled. That is, if K0=0, a PDSCH and a PDCCH are located in the same slot. A starting and length indicator value (SLIV) indicates an index of a symbol where a PDSCH starts within one slot and the number of consecutive symbols to which a PDSCH is assigned. A PDSCH mapping type indicates information related to a location of a first DMRS (front-loaded DMRS) of a PDSCH. In the case of PDSCH mapping type A, the first DMRS (front-loaded DMRS) of the PDSCH is located in a third and a fourth symbol of a slot, and in the case of PDSCH mapping type B, the first DMRS (front-loaded DMRS) of the PDSCH is located in the first symbol among symbols on which the PDSCH is scheduled.

Here, when the row of the TDRA table is configured in the higher layer signal, a part of (K0, SLIV, and PDSCH mapping type) in the scheduling information may be omitted. In this case, it may be interpreted as a default value. For example, when K0 is omitted, a value of K0 may be interpreted as 0. In addition, when the row of the TDRA table is configured, information other than (K0, SLIV, and PDSCH mapping type) may be additionally configured.

In the following description, it is assumed that multi-PDSCH scheduling is configured for the UE. Multi-PDSCH scheduling configuration may refer to configuration of multiple pieces of scheduling information in at least one row of the TDRA table. For reference, one piece of scheduling information may be configured in another row of the TDRA table. Therefore, although multi-PDSCH scheduling is configured for the UE, single-PDSCH scheduling may be indicated or multi-PDSCH scheduling may be indicated to the UE depending on a TDRA field of received DCI. In other words, the multi-PDSCH scheduling indication may be understood as a case in which the row of the TDRA table indicated by the UE from the DCI includes multiple pieces of scheduling information, and the single-PDSCH scheduling indication may be understood as a case in which the row of the TDRA table indicated by the UE from the DCI includes one piece of scheduling information.

In the case of the single-PDSCH scheduling indication, one PDSCH is scheduled, and the one PDSCH requires information such as a modulation coding scheme (MCS), a new data indicator (NDI), a redundancy version (RV), and an HARQ process number (HPN). To this end, DCI indicating scheduling of a single-PDSCH is required to include information such as an MCS, an NDI, an RV, and an HPN of the one PDSCH. More specifically,

- DCI indicating scheduling of a single-PDSCH may include one MCS field. An MCS (i.e., a modulation scheme and a code rate of a channel code) indicated in the MCS field may be applied to one PDSCH scheduled by the DCI.
- DCI indicating scheduling of a single-PDSCH may include a 1-bit NDI field. The UE may obtain an NDI value from the 1-bit NDI field and determine whether one PDSCH transmits a new transmission block or retransmits a previous transmission block, based on the NDI value.
- DCI indicating scheduling of a single-PDSCH may include a 2-bit RV field. The UE may obtain an RV value from the 2-bit RV field and determine a redundancy version of one PDSCH, based on the RV value.
- DCI indicating scheduling of a single-PDSCH may include one HPN field. The one HPN field may be 4 bits. (For reference, when the UE supports up to 32 HARQ processes, the HPN field may be expanded to 5 bits, but for convenience of explanation of the disclosure, the HPN field is assumed to be 4 bits). One HARQ process ID may be indicated through the one HPN field. The one HARQ process ID may be an HARQ process ID of one scheduled PDSCH.

When multi-PDSCH scheduling is indicated, multiple PDSCHs are scheduled, and thus each PDSCH requires information such as an MCS, an NDI, an RV, and an HPN. To this end, DCI indicating multi-PDSCH scheduling is required to include information such as an MCS, an NDI, an RV, and an HPN of each scheduled PDSCH. More specifically,

- DCI indicating multi-PDSCH scheduling may include one MCS field. An MCS (i.e., a modulation scheme and a code rate of a channel code) indicated in the MCS field may be applied equally to all PDSCHs scheduled by the DCI. That is, DCI for scheduling a multi-PDSCH may not schedule different PDSCHs with different MCSs.
- DCI indicating multi-PDSCH scheduling may include a K-bit NDI field. K may be the largest value among the number of scheduling information included in each row of the TDRA table. For example, when the TDRA table includes two rows, a first row includes four pieces of scheduling information, and a second row includes 8 pieces of scheduling information, K may be 8 (K=8). A k-th bit of the K-bit NDI field may indicate an NDI value of a PDSCH corresponding to k-th scheduling information. That is, the UE may obtain an NDI value from the k-th bit of the K-bit NDI field for a k-th PDSCH, and determine whether the k-th PDSCH transmits a new transmission block or retransmits a previous transmission block, based on the NDI value.
- DCI indicating multi-PDSCH scheduling may include a K-bit RV field. A k-th bit of the K-bit RV field may indicate an RV value of a PDSCH corresponding to k-th scheduling information. That is, the UE may obtain an RV value from the k-th bit of the K-bit RV field for a k-th PDSCH, and determine a redundancy version of the k-th PDSCH, based on the RV value.
- DCI indicating multi-PDSCH scheduling may include one HPN field. The one HPN field may be 4 bits. (For reference, when the UE supports up to 32 HARQ processes, the HPN field may be expanded to 5 bits, but for convenience of explanation of the disclosure, the HPN field is assumed to be 4 bits). One HARQ process ID may be indicated through the one HPN field.

The one HARQ process ID may be an HARQ process ID of a first PDSCH among PDSCHs scheduled by the DCI indicating multi-PDSCH scheduling. The first PDSCH corresponds to first scheduling information. Thereafter, HPNs of the PDSCHs may be sequentially increased by 1. That is, in the case of a second PDSCH (corresponding to second scheduling information), an HPN is a value obtained by increasing the HARQ process ID of the first PDSCH by 1. For reference, if the HARQ process ID exceeds the maximum number of HARQ process IDs *(numOfHARQProcessID)* configured for the UE, a modulo operation is performed. In other words, when the HARQ process ID indicated by the DCI is "x", an HARQ process ID of the k-th PDSCH is determined as follows.

HPN of k-th PDSCH = (x + k -1) modulo *numOfHARQProcessID*

As described above, when single-PDSCH scheduling is indicated, DCI includes a 1-bit NDI field or a 2-bit RV field, and when multi-PDSCH scheduling is indicated, DCI includes a K-bit NDI field or a K-bit RV field. For reference, whether a single-PDSCH scheduling indication is indicated or a multi-PDSCH scheduling indication is indicated is determined depending on the indication in a TDRA field of the DCI (that is, the number of pieces of scheduling information included in a row of the indicated TDRA field). Therefore, one piece of DCI is required to support both single-PDSCH scheduling and multi-PDSCH scheduling. If the length of DCI for a single-PDSCH scheduling indication and the length of DCI for a multi-PDSCH scheduling indication are different from each other, "0" is added (padding) to the DCI of the shorter length of the two, so that the length of each DCI may be adjusted to be the same.

A DCI interpretation process of the UE is as follows. The UE receives DCI, and in this case, the length of the DCI is assumed to be equal to the longer DCI length among the length of the DCI for the single-PDSCH scheduling indication and the length of the DCI for the multi-PDSCH scheduling indication. The UE may be aware of a location of a TDRA field in the DCI. The location of the TDRA field may be the same in the DCI for the single-PDSCH scheduling indication and the DCI for the multi-PDSCH scheduling indication. The UE may determine whether it is DCI for a single-PDSCH scheduling indication or DCI for a multi-PDSCH scheduling indication through the TDRA field. That is, the UE may determine that it is a single-PDSCH scheduling indication if the number of pieces of scheduling information included in a row of the indicated TDRA field is one, and determine that it is a multi-PDSCH scheduling indication if the number of pieces of included scheduling information is two or more.

If the UE determines that single-PDSCH scheduling is indicated, DCI may be interpreted according to the determination. That is, an NDI field may be interpreted as 1 bit, and an RV field may be interpreted as 2 bits. If the UE determines that multi-PDSCH scheduling is indicated, DCI may be interpreted according to the determination. That is, an NDI field may be interpreted as K bits and an RV field may be interpreted as K bits. For reference, locations of other fields within the DCI may vary depending on the length of the NDI field or RV field. Therefore, the bit lengths of other fields are the same depending on whether it is a single-PDSCH scheduling indication or a multi-PDSCH scheduling indication, but the locations within the DCI may vary.

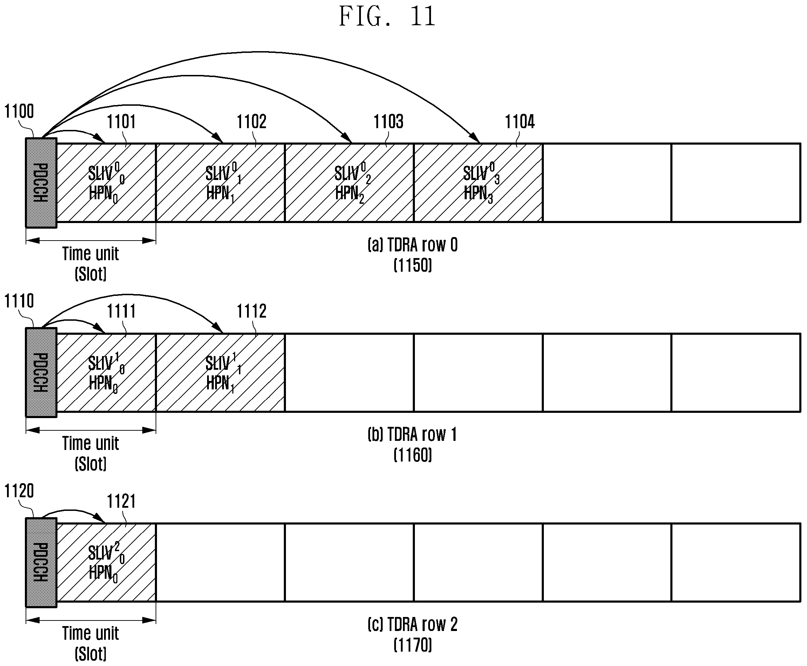

FIG. 11 illustrates an example of a PDSCH scheduling scheme according to the above description. The disclosure assumes the following TDRA table.

- A first row (row 0) of the TDRA table includes four pieces of scheduling information (K0, SLIV, and PDSCH mapping type). Here, a first SLIV is referred to as $SLIV^0_0$, a second SLIV is referred to as $SLIV^0_1$, a third SLIV is referred to as $SLIV^0_2$, and a fourth SLIV is referred to as $SLIV^0_3$. Therefore, when the UE receives an indication of the first row (row 0) of the TDRA table, the UE may determine that multi-PDSCH scheduling is indicated.
- A second row (row 1) of the TDRA table includes two pieces of scheduling information (K0, SLIV, and PDSCH mapping type). Here, a first SLIV is referred to as $SLIV^1_0$ and a second SLIV is referred to as $SLIV^1_1$. Therefore, when the UE receives an indication of the second row (row 1) of the TDRA table, the UE may determine that multi-PDSCH scheduling is indicated.
- A third row (row 2) of the TDRA table includes one piece of scheduling information (K0, SLIV, and PDSCH mapping type). Here, a SLIV is referred to as $SLIV^2_0$. Therefore, when the UE receives an indication of the third row (row 2) of the TDRA table, the UE may determine that single-PDSCH scheduling is indicated.

Case (a) 1150 of FIG. 11 illustrates a case where a UE has received an indication of the first row (row 0) of the TDRA table. In DCI received by the UE on a PDCCH 1100, a TDRA field may receive an indication of the first row (row 0). Accordingly, the UE may receive four PDSCHs, based on four pieces of scheduling information (K0, SLIV, and PDSCH mapping type) in the first row (row 0). The UE may determine symbols for receiving a first PDSCH 1101, based on $SLIV^0_0$ which is a first SLIV, determine symbols for receiving a second PDSCH 1102, based on $SLIV^0_1$ which is a second SLIV, determine symbols for receiving a third PDSCH 1103, based on $SLIV^0_2$ which is a third SLIV, and determine symbols for receiving a fourth PDSCH 1104, based on $SLIV^0_3$ which is a fourth SLIV.

Each of the four PDSCHs may have a unique HARQ process ID. That is, the first PDSCH may have $HPN_0$ as an HARQ process ID, and the second PDSCH may have $HPN_1$ as an HARQ process ID, the third PDSCH may have $HPN_2$ as an HARQ process ID, and the fourth PDSCH may have $HPN_3$ as an HARQ process ID. Here, the HARQ process ID of the first PDSCH is indicated in the DCI. For example, the DCI may indicate $HPN_0=0$ as the HARQ process ID of the first PDSCH. In this case, the HARQ process ID of the second PDSCH may be $HPN_1=1$, the HARQ process ID of the third PDSCH may be $HPN_1=2$, and the HARQ process ID of the fourth PDSCH may be $HPN_1=3$.

Case (b) 1160 of FIG. 11 illustrates a case where the UE has received an indication of the second row (row 1) of the TDRA table. In DCI received by the UE on a PDCCH 1110, a TDRA field may receive an indication of the second row (row 1). Accordingly, the UE may receive two PDSCHs, based on two pieces of scheduling information (K0, SLIV, and PDSCH mapping type) in the second row (row 1). The UE may determine symbols for receiving a first PDSCH 1111, based

on $SLIV1_0$ which is a first SLIV, and determine symbols for receiving a second PDSCH 1112, based on $SLIV1_1$ which is a second SLIV.

Each of the two PDSCHs may have a unique HARQ process ID. That is, a first PDSCH may have $HPN_0$ as an HARQ process ID, and a second PDSCH may have $HPN_1$ as an HARQ process ID. Here, the DCI indicates the HARQ process ID of the first PDSCH. For example, the DCI may indicate $HPN_0=0$ as the HARQ process ID of the first PDSCH. In this case, the HARQ process ID of the second PDSCH may be $HPN_1=1$.

Case (c) 1170 of FIG. 11 illustrates a case where the UE has received an indication of the third row (row 2) of the TDRA table. In DCI received by the UE on a PDCCH 1120, a TDRA field may receive an indication of the third row (row 2). Accordingly, the UE may receive one PDSCH, based on one piece of scheduling information (K0, SLIV, and PDSCH mapping type) in the third row (row 2). Symbols for receiving one PDSCH 1121 may be determined based on $SLIV2_0$ which is one SLIV. An HARQ process ID of one PDSCH, that is, $HPN_0$, is indicated in the DCI. For example, the DCI may indicate $HPN_0=0$ as the HARQ process ID of the first PDSCH.

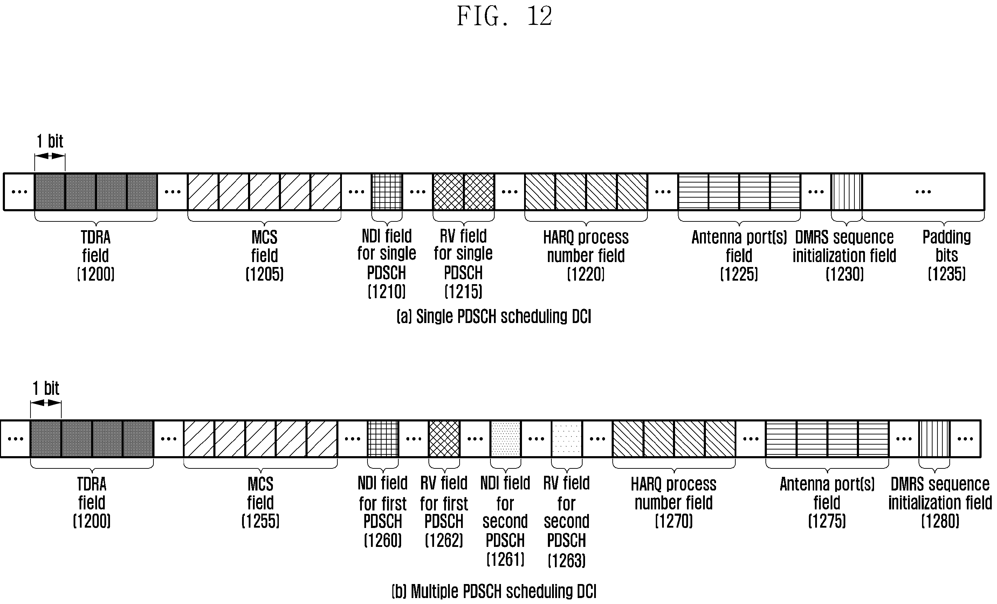

FIG. 12 illustrates an example of a structure of DCI of single-PDSCH scheduling and multi-PDSCH scheduling.

Referring to cases (a) and (b) of FIG. 12, a UE may determine a location of a TDRA field 1200 in received DCI. The location of the TDRA field is the same for single-PDSCH scheduling DCI and multi-PDSCH scheduling DCI. From a value of the TDRA field, the UE may determine whether the received DCI is DCI indicating single-PDSCH scheduling or DCI indicating multi-PDSCH scheduling.

If a row corresponding to the value of the TDRA field of the received DCI includes one piece of scheduling information (K0, SLIV, and PDSCH mapping type) (for example, the third row (row 2) of the TDRA table), the UE interprets the DCI as single-PDSCH scheduling DCI as shown in case (a). Referring to case (a), the single-PDSCH scheduling DCI may include a 5-bit MCS field 1205, a 1-bit NDI field 1210, a 2-bit RV field 1215, and a 4-bit HARQ field 1220. In addition, the single-PDSCH scheduling DCI may include a field other than the fields described above. For example, the single-PDSCH scheduling DCI may include an antenna port(s) field 1225 to a DMRS sequence initialization field 1230. In addition, if the single-PDSCH scheduling DCI is shorter than multi-PDSCH scheduling DCI, the single-PDSCH scheduling DCI may include a padding bit 1235.

If the row corresponding to the value of the TDRA field of the received DCI includes two pieces of scheduling information (K0, SLIV, and PDSCH mapping type) (for example, the first row (row 0) or the second row (row 1) of the TDRA table), the UE interprets the DCI as multi-PDSCH scheduling DCI as shown in case (b). Referring to case (b), the multi-PDSCH scheduling DCI may include a 5-bit MCS field 1255, K-bit NDI fields 1260 and 1261, K-bit RV fields 1262 and 1263, and a 4-bit HARQ field 1270. In addition, the multi-PDSCH scheduling DCI may include a field other than the fields described above. For example, the multi-PDSCH scheduling DCI may include an antenna port(s) field 1275 to a DMRS sequence initialization field 1280. For reference, case (b) illustrates DCI by which up to two PDSCHs are scheduled. 2-bit NDI fields 1260 and 1261 are shown separately, but may be attached as one 2-bits. In addition, in case (b), 2-bit RV fields 1262 and 1263 are shown separately, but may be attached as one 2-bits.

For reference, referring to cases (a) and (b), by assuming that the length of DCI indicating single-PDSCH scheduling is shorter than the length of DCI indicating multi-PDSCH scheduling, the padding bit 1235 has been added to the single-PDSCH scheduling DCI. If the length of the DCI indicating single-PDSCH scheduling is longer than the length of the DCI indicating multi-PDSCH scheduling, a padding bit may be added to the DCI indicating multi-PDSCH scheduling.

Hereafter, unless otherwise specified, the disclosure assumes that a PDSCH transmits a single codeword. If two codeword transmissions are configured for the UE, unless otherwise specified, fields of DCI are for the first codeword.

[Related to Multi-cell Multi-PDSCH/PUSCH scheduling]

In Rel-18, multi-cell multi-PDSCH scheduling in which one piece of DCI schedules PDSCHs for each of multiple cells and multi-cell multi-PUSCH scheduling in which one piece of DCI schedules PUSCHs for each of multiple cells are being discussed. Here, one piece of DCI may schedule only one PDSCH or one PUSCH for one cell. That is, in the case of multi-cell multi-PDSCH scheduling, when PDSCHs are scheduled for multiple cells, only up to one PDSCH may be scheduled for each cell. In the case of multi-cell multi-PUSCH scheduling, when PUSCHs are scheduled for multiple cells, only up to one PUSCH may be scheduled for each cell.

The disclosure propose a DCI format indicated by a base station to a UE and an operation of the UE according to the DCI format. Here, the DCI format may be a DCI format indicating multi-cell multi-PDSCH scheduling or a DCI format indicating multi-cell multi-PUSCH scheduling. Hereinafter, multi-cell multi-PDSCH scheduling may be used interchangeably with multi-cell PDSCH scheduling, and multi-cell multi-PUSCH scheduling may be interchanged with multi-cell PUSCH scheduling.

**<First embodiment: A method of configuring TDRA information>**

In the first embodiment of the disclosure, a UE may receive an indication of multi-cell scheduling according to a TDRA table in a DCI format and indicated TDRA. For multi-cell multi-PDSCH or multi-cell multi-PUSCH scheduling, the base station may configure the TDRA table for the UE through a higher layer signal as follows. The TDRA table may include one or multiple rows. The number of rows may be configured to be up to a maximum of $N_{row}$, and each of the rows may correspond to a unique index. TDRA information for multi-cell multi-PDSCH scheduling may include scheduling information (K0, SLIV, and PDSCH mapping type). TDRA information for multi-cell multi-PUSCH scheduling may include scheduling information (K2, SLIV, and PUSCH mapping type).

In the multi-cell multi-PDSCH scheduling described in this embodiment, the TDRA table row information may further include an index of a cell in which a PDSCH is scheduled according to each piece of scheduling information and/or a BWP index within the cell.

The multi-cell multi-PUSCH scheduling described in this embodiment may include an index of a cell in which a PUSCH according to each piece of scheduling information is scheduled in the TDRA table row information, and include, if a normal UL (NUL) carrier and a supplementary UL (SUL) carrier are configured in the cell, an index indicating a UL carrier, and a BWP index on the UL carrier. For reference, if an SUL is not configured in the cell, the index indicating the UL carrier may not be included, and a PUSCH may be scheduled on one UL carrier in the cell.

In addition, although the above has described an example in which each piece of scheduling information of the TDRA table includes the index of the cell in which the PDSCH is scheduled and/or the BWP index within the cell, an index of a cell in which a PDSCH corresponding to each piece of scheduling information is scheduled and/or a BWP index within the cell can be configured as separate information.

Here, the index of the cell may be a unique value for each cell that supports multi-cell transmission. In addition, the BWP index may be a unique value of BWPs supported by each cell. If the index indicating the UL carrier may be 0 to 1, if the index is 0, an NUL may be indicated and if the index is 1, an SUL may be indicated.

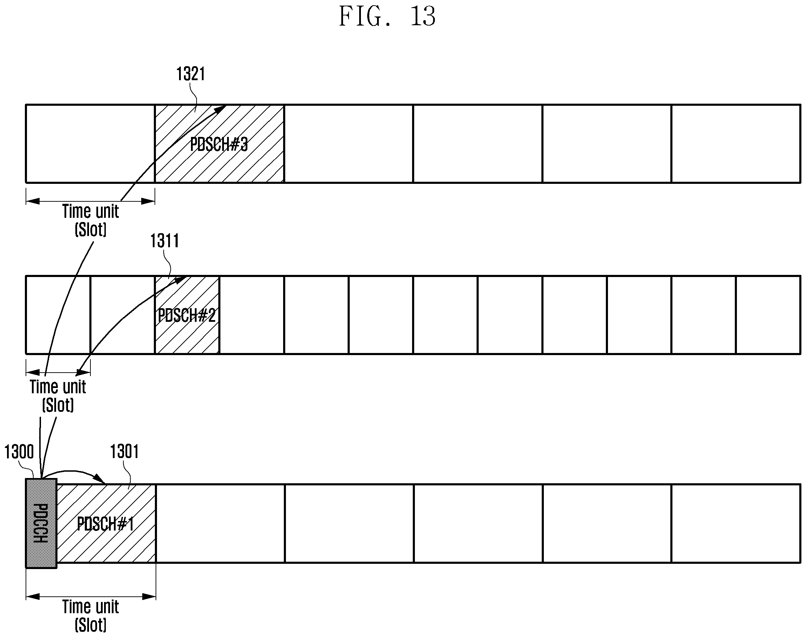

FIG. 13 illustrates an example of scheduling according to the scheduling scheme described above. The disclosure assumes the following TDRA table.

- A row (row 0) of the TDRA table includes scheduling information (cell index, K0, SLIV, PDSCH mapping type, and BWP index) for three cells. Here, a first cell index is referred to as cell#0, a second cell index is referred to as cell#1, and a third cell index is referred to as cell#2. Therefore, when a UE receives an indication of the row (row 0) of the TDRA table, the UE may determine that multi-PDSCH scheduling is indicated.

FIG. 13 illustrates an example of a case where a UE has received an indication of the first row (row 0) of the TDRA table. In DCI received by the UE on a PDCCH 1300, a TDRA field may indicate the first row (row 0). Accordingly, the UE may receive a PDSCH from three cells, based on three pieces of scheduling information (cell index, K0, SLIV, PDSCH mapping type, and BWP index) in the first row (row 0). The UE may determine a cell for receiving a first PDSCH 1301, based on cell#0 which is a first cell index, determine a cell for receiving a second PDSCH 1311, based on cell#1 which is a second cell index, and determine a cell for receiving a third PDSCH 1321, based on a third cell index.

Among a higher layer configuration information TDRA table configured by the base station for the UE, a downlink control information configuration and indication method may be needed to schedule a multi-cell operation. Accordingly, the following method describes in detail a method of configuring TDRA indication information in downlink control information.

[Method 1-1. A method of including multiple pieces of information in one TDRA row]

A base station may configure one TDRA row to include multiple pieces of cell information in order to support a multi-cell multi-PDSCH reception operation or a multi-cell multi-PUSCH transmission operation to a UE.

The base station may indicate cell information to be scheduled to the UE through downlink control information TDRA. Accordingly, one TDRA row in downlink control information may include scheduling information (cell index, K0, SLIV, mapping type, and BWP index) for multiple cells.

For example, for multi-cell multi-PDSCH scheduling, the base station may configure, for the UE, PDSCH scheduling for N different cells in one TDRA row, and indicate the row through a TDRA field in downlink control information. In this case, one row in TDRA may include N pieces of scheduling information (Cell index, K0, SLIV, mapping type, and BWP index). In this case, cell indexes in N pieces of scheduling information in one row may be different from each other.

The base station may indicate different K0 values to prevent a collision during multi-cell PDSCH reception.

For another example, for multi-cell multi-PUSCH scheduling, the base station may configure, for the UE, PUSCH scheduling for N different cells in one TDRA row, and indicate the row through a TDRA field in downlink control information. In this case, one row in TDRA may include N pieces of scheduling information (Cell index, NUL/SUL index, K2, SLIV, mapping type, and BWP index). In this case, cell indexes in N pieces of scheduling information in one row may be different from each other.

The base station may indicate different K2 values to prevent a collision of a multi-cell PUSCH transmission. In addition, the base station may perform indication through a corresponding index to inform the UE whether the corresponding uplink transmission uses a normal UL carrier or a supplementary UL carrier.

As an example of the disclosure, among TDRA rows configured by the UE, a specific row includes multiple pieces of scheduling information, but another specific row may include one piece of scheduling information. Therefore, the UE may determine whether it is single scheduling or multi-cell scheduling depending on a TDRA row indicated by a TDRA field of a DCI format.

As an example of the disclosure, when specific rows among TDRA rows configured by the UE include multiple pieces of scheduling information, the number of pieces of scheduling information included in first specific rows and the number of pieces of scheduling information included in second specific rows may be equal to or different from each other. That is, each of the TDRA rows may include a different number of pieces of scheduling information.

As an example of the disclosure, N pieces of scheduling information in one row configured by the UE may be interpreted as follows. First, it is assumed that the UE has received two pieces of scheduling information. Here, the description is made using two pieces of scheduling information, but this may be expanded to any number of pieces of scheduling information.

First scheduling information is referred to as (a first cell index, a first K0, a first SLIV, a first mapping type, and a first BWP index), and second scheduling information is referred to as (a second cell index, a second K0, a second SLIV, a second mapping type, and a second BWP index). Here, the scheduling information may be sorted in ascending order of a cell index. That is, the first cell index may always be smaller than the second cell index. This is because, as mentioned earlier, only one PDSCH may be scheduled in one cell.

Furthermore, a cell index may be configured by using an offset (difference) value from a cell index of previous scheduling information. For example, it is assumed that a PDSCH according to the first scheduling information is scheduled in a cell having an index of c, and a PDSCH according to the second scheduling information is scheduled in a cell having an index of d. Here, c<d. In this case, a value corresponding to d-c, not d, where the PDSCH according to the second scheduling information is scheduled, may be configured as the second cell index of the second scheduling information. In this case, overhead of configuring each piece of scheduling information in the TDRA table may be reduced.

As an example of the disclosure, a BWP index may be omitted. In this case, a PDSCH or a PUSCH may be transmitted in an active BWP. The active BWP may refer to a BWP that is activated at a time point when DCI for scheduling a multi-cell multi-PDSCH is received or at a time point when DCI for scheduling a multi-cell multi-PUSCH is received. Therefore, multi-cell multi-PDSCH scheduling and multi-cell multi-PUSCH scheduling may not indicate a BWP change.

If DCI for scheduling a multi-cell multi-PDSCH (or PUSCH) is received and indicates data transmission and reception in a BWP other than the BWP activated at a time point when the DCI is received, the UE may understand that a BWP change is indicated. In this case, data scheduling may be performed in consideration of a delay time required at the time of changing a BWP as described above.

[Method 1-2. A method of including single cell information in one TDRA row]

A base station may include different cell information in each TDRA row in order to support a multi-cell PDSCH or multi-cell PUSCH transmission operation to a UE.

Unlike in method 1-1, where multiple pieces of cell scheduling information is included in one TDRA row, the base station may be configured to include scheduling information (cell index, K0, SLIV, mapping type, and BWP index) for one cell in one TDRA row. That is, if the base station may configure a TDRA table with up to a maximum of $N_{row}$ for the UE, a multi-cell may also be configured with up to a maximum of $N_{row}$. In this case, since one TDRA includes only information on one cell, the UE may not need to determine whether it is single cell scheduling or multi-cell scheduling.

For example, for multi-cell PDSCH scheduling, the base station may indicate, to the UE, scheduling for one cell of one TDRA row through a TDRA field in downlink control information.

For another example, for multi-cell PUSCH scheduling, the base station may indicate, to the UE, scheduling for one cell of one TDRA row through a TDRA field in downlink control information.

[Method 2. A method by which a UE determines whether it is multi-cell scheduling]

A UE may determine, through a multi-cell scheduling index in a DCI format, whether it is multi-cell scheduling, indicated by a base station.

The multi-cell scheduling index may be included in the DCI format. If one row of TDRA scheduled by the base station includes multiple pieces of cell scheduling information, the multi-cell scheduling index may be configured to be "1". If one row of TDRA scheduled by the base station does not include multiple pieces of cell scheduling information, the multi-cell scheduling index may be configured to be "0".

For example, when interpreting a TDRA field transmitted from the base station, the UE may determine whether it is multi-cell scheduling through the multi-cell scheduling index.

In this case, depending on method 2-1-1 and method 2-1-2, a location of the multi-cell scheduling index may also be changed.

[Method 2-1-1. A method of indicating a multi-cell scheduling index for each TDRA row]

In order to inform a UE of whether it is multiple cell scheduling, a base station may include a multi-cell scheduling index corresponding to each TDRA row (configured through an RRC signal) in a DCI format.

According to method 1-1 above, the base station may include multiple pieces of cell scheduling information in one TDRA row. Accordingly, the base station may inform the UE of whether it is multiple cell scheduling by including multi-cell scheduling indexes corresponding to each row of TDRA in the DCI format. When performing DCI reception and TDRA analysis, the UE may determine whether it is multiple cell scheduling in each TDRA row through a multi-cell scheduling index. If the multi-cell scheduling index is indicated as "1", the UE may determine that a corresponding TDRA row is a row indicating multiple cell scheduling. Conversely, if the multi-cell scheduling index is indicated as "0", the UE may determine that a corresponding TDRA row indicates single cell scheduling.

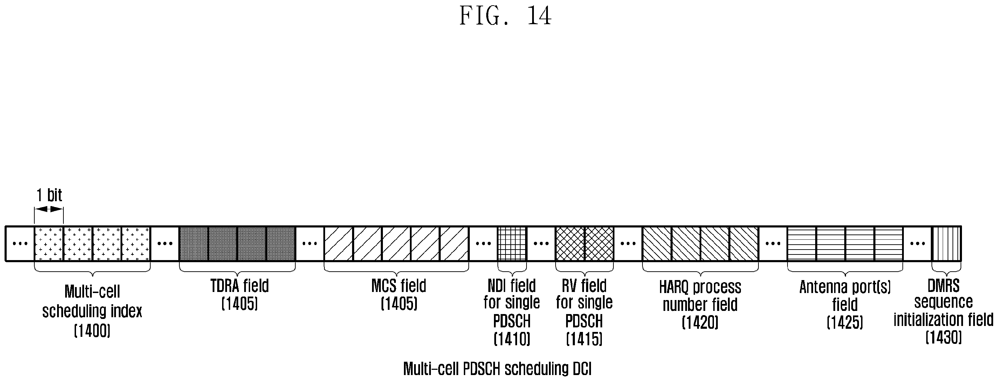

FIG. 14 illustrates an example of the multi-cell scheduling index application method described above. A multi-cell scheduling index 1400 may be located before a TDRA field 1405. If the multi-cell scheduling index is indicated as "1" when a UE receives DCI, the UE may determine that a row of a corresponding TDRA field is a TDRA row including multi-cell scheduling information. If the multi-cell scheduling index is indicated as "0" when the UE receives DCI, the UE may determine that a row of a corresponding TDRA field is a TDRA row that does not include multi-cell scheduling information, that is, a TDRA row that includes single-cell scheduling information.

[Method 2-1-2. A method of indicating a multi-cell scheduling index at the very beginning of TDRA information]

A base station may include a multi-cell scheduling index in a DCI format to inform a UE of whether it is multiple cell scheduling.

According to method 1-2 above, the base station may include single cell scheduling information in each TDRA row. Accordingly, the base station may inform the UE that a corresponding DCI format schedules multiple cells by including a multi-cell scheduling index in the DCI format. When performing DCI reception and TDRA analysis, the UE may determine whether it is multiple cell scheduling through a multi-cell scheduling index. If the multi-cell scheduling index is indicated as "1", the UE may determine that a corresponding DCI format includes multiple cell scheduling. Conversely, if the multi-cell scheduling index is indicated as "0", the UE may determine that a corresponding DCI format does not indicate multiple cell scheduling.

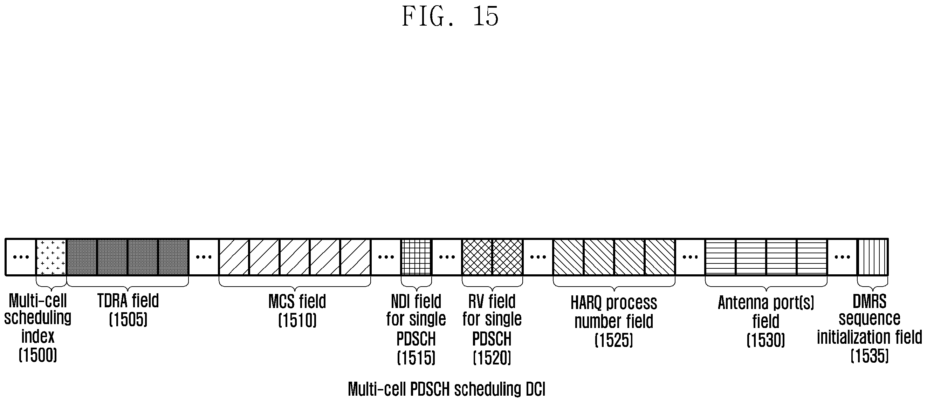

FIG. 15 illustrates an example of the multi-cell scheduling index application method described above. A multi-cell scheduling index 1500 may be located before an MSB of TDRA 1505. If the multi-cell scheduling index is indicated as "1" when a UE receives DCI, the UE may determine that each row of an indicated TDRA field includes multi-cell scheduling information. If the multi-cell scheduling index is indicated as "0" when the UE receives DCI, the UE may determine that each row of the indicated TDRA field is a TDRA row that does not include multi-cell scheduling information, that is, a TDRA row that includes single-cell scheduling information.

[Method 3. A method of configuring DCI format information]

[Method 3-1. A method of configuring each field for scheduling a multi-cell multi-PDSCH and a multi-cell multi-PUSCH]

A base station may configure a downlink control information bit field for each piece of configuration information in order to schedule a multi-cell multi-PDSCH or a multi-cell multi-PUSCH to a UE. For example, DCI configuration information may include separate fields for a bit field for a multi-cell multi-PDSCH and a bit field for a multi-cell multi-PUSCH. If the base station desires to schedule a multi-cell multi-PDSCH to the UE, the base station may transmit, to the UE, DCI including configuration information for multi-cell multi-PDSCH scheduling. In this case, the bit field for the multi-cell multi-PUSCH may be zero-padded.

For example, it is assumed that there are K pieces of scheduling information included in a row indicated by a TDRA field included in a DCI format received by the UE. Here, K is equal to the number of indexes of cells to be scheduled. In this case, at least K number of the following DCI fields may be included in the DCI format, and the DCI fields may correspond to pieces of scheduling information, respectively.

Here, a correspondence relationship between the K DCI fields and the K pieces of scheduling information may be determined according to an ascending order of indexes of cells included in the scheduling information. That is, the first of the K DCI fields may correspond to scheduling information of the lowest cell index.

When the DCI format schedules PUSCHs, at least one of the following DCI fields may be included in K DCI formats. (That is, taking an FDRA field as an example, K FDRA fields such as a first FDRA field, a second FDRA field, ...,

and a K-th FDRA field may be included)

- Frequency domain resource assignment (FDRA) field
- TPC command for scheduled PUSCH field
- Open-loop power control parameter set indicator field
- Precoding information and number of layers field
- Antenna port field
- PTRS-DMRS association field
- New data indicator (NDI) field
- Redundancy version (RV) field
- Invalid symbol pattern field

When the DCI format schedules PDSCHs, at least one of the following DCI fields may be included in K DCI formats. (That is, taking an FDRA field as an example, K FDRA fields such as a first FDRA field, a second FDRA field, ..., and a K-th FDRA field may be included)

- Frequency domain resource assignment (FDRA) field
- Rate matching indicator
- Transmission configuration indication
- Antenna port field
- New data indicator (NDI) field
- Redundancy version (RV) field

For reference, here it is expressed as K DCI fields, but this may be defined as K sub-fields within one DCI field.

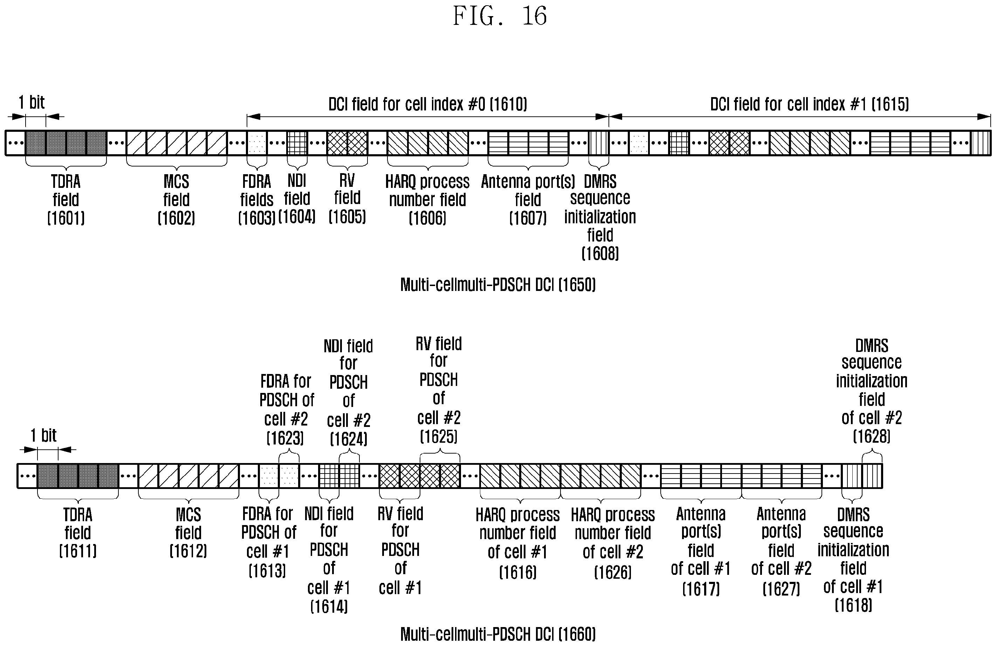

FIG. 16 illustrates an example of the DCI format for the multi-cell multi-PDSCH described above.

According to case (a) 1650 of FIG. 16, a base station may perform multiple cell scheduling through a single piece of DCI.

As an example, as described above, a DCI field may include K subfields. If a single piece of DCI schedules PDSCH transmission in two cells to a UE, a DCI format may be configured as a DCI field for cell index #0 1610 and a DCI field for cell index #1 1615. Each DCI field may include the control information described above. For example, the DCI field for cell index #0 1610 may include fields such as an FDRA field 1603, an NDI field 1604, an RV field 1605, an HPN field 1606, and an antenna port(s) field 160. Such a format may be equally applied to a DCI configuration for multi-cell multi-PUSCH scheduling.

As another example, as in case (b) 1660, DCI may be configured so that the same scheduling information field is consecutive. If a single piece of DCI schedules PDSCH transmission in two cells to the UE, for example, an FDRA field may be configured as FDRA for PDSCH of cell #1 1613 and FDRA for PDSCH of cell #2 1623. Each DCI field may include the above-described control information in a format such as case (b) 1660. Such a format may be equally applied to a DCI configuration for multi-cell multi-PUSCH scheduling.

Referring to FIG. 16, if the UE determines multi-cell scheduling after receiving the DCI from the base station, the UE may operate as described in FIG. 13.

For example, it is assumed that there are K pieces of scheduling information included in a TDRA row included in the DCI format received by the UE. Here, K is equal to the number of indexes of cells to be scheduled. In this case, when a certain condition is met, for example, two following DCI fields may be included in the DCI format, a first DCI field may correspond to a PUCCH corresponding to first scheduling information, and a second DCI field may correspond to a PUCCH corresponding to second scheduling information.

More specifically, the UE may receive a configuration of up to two PUCCH groups. Each of the PUCCH groups may include an index of at least one downlink cell. One downlink cell index may correspond to one PUCCH group. When the UE receives a PDSCH in a specific downlink cell, HARQ-ACK information of the PDSCH may be transmitted on a PUCCH in an uplink cell defined in the PUCCH group including the downlink cell. For reference, the uplink cell defined in the PUCCH group may be called a Pcell or a PUCCH cell. That is, HARQ-ACK information on PDSCHs scheduled in a downlink cell included in a PUCCH group may be transmitted in an uplink cell defined in the PUCCH group. Such a set of downlink cells may be referred to as a cell group.

If the TDRA row indicated by the DCI format received by the UE schedules only PDSCHs in a downlink cell within one PUCCH group, one following DCI field related to HARQ-ACK transmission and PUCCH transmission may be sufficient.

- TPC command for scheduled PUCCH
- PUCCH resource indicator

- PDSCH-to-HARQ_feedback timing indicator
- PDSCH group index
- New feedback indicator
- Number of requested PDSCH group(s)
- HARQ-ACK retransmission indicator
- PUCCH Cell indicator

When the TDRA row indicated by the DCI format received by the UE schedules a PDSCH in a downlink cell within two PUCCH groups, in the DCI format, at least one of the following DCI fields related to HARQ-ACK transmission and PUCCH transmission may include a first DCI field and a second DCI field. (Alternatively, the DCI fields may be included in the form of a first sub-DCI field and a second sub-DCI field also.)

- First TPC command for scheduled PUCCH field, and second TPC command for scheduled PUCCH field
- First PUCCH resource indicator field, and second PUCCH resource indicator field
- First PDSCH-to-HARQ_feedback timing indicator field, and second PDSCH-to-HARQ_feedback timing indicator field
- First PDSCH group index field, and second PDSCH group index field
- First New feedback indicator field, and second New feedback indicator field
- First Number of requested PDSCH group(s) field, and second Number of requested PDSCH group(s) field
- First HARQ-ACK retransmission indicator field, and second HARQ-ACK retransmission indicator field
- First PUCCH Cell indicator field, and second PUCCH Cell indicator field

Here, two DCI fields may be applied to two PUCCH groups, respectively. A first DCI field may be applied to a first PUCCH group, and a second DCI field may be applied to a second PUCCH group. Here, the first PUCCH group may be a PUCCH group that transmits a PUCCH in a Pcell.

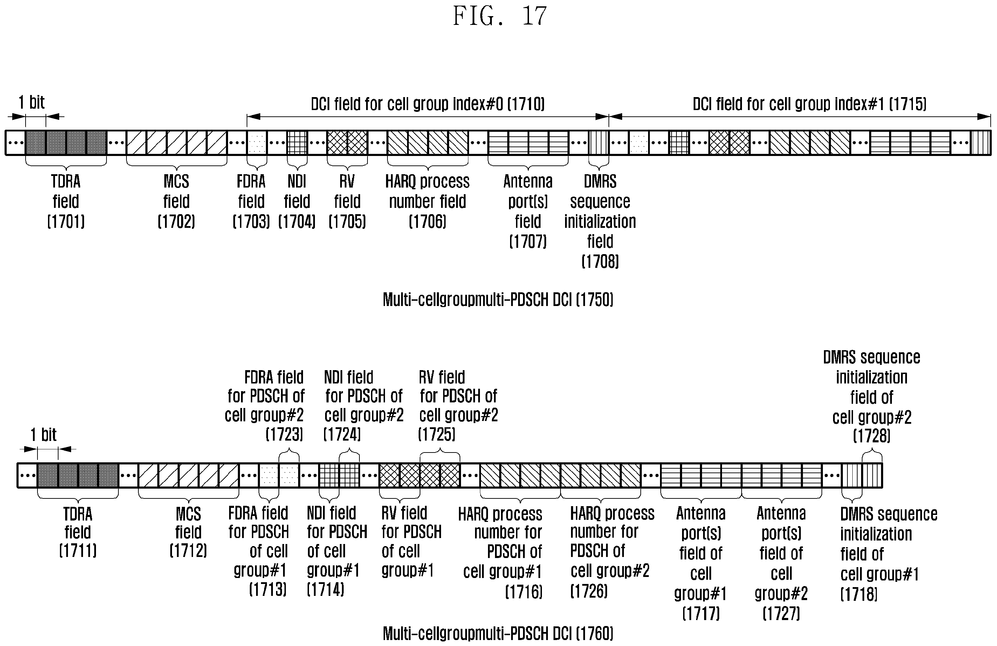

FIG. 17 illustrates an example of a DCI format for a PUCCH group for multi-cell multi-PDSCH.

According to case (a) 1750 of FIG. 17, a base station may perform scheduling for multiple cell groups through a single piece of DCI.

As an example, as described above, a DCI field may include a subfield. If a single piece of DCI schedules PDSCH transmission in two cell groups to a UE, a DCI format may be configured as a DCI field for cell index #0 1710 and a DCI field for cell index #1 1715. For example, the DCI field for cell index #0 1710 may include an FDRA field 1703, an NDI field 1704, an RV field 1705, an HPN field 1706, an antenna port(s) field 1707, and the like. Such a format may be equally applied to a DCI configuration for multi-cell multi-PUSCH scheduling.

As another example, as in case (b) 1760, DCI may be configured so that the same scheduling information field is consecutive. If a single piece of DCI schedules PDSCH transmission in two cells to the UE, for example, an FDRA field may be configured as FDRA for PDSCH of cell group #1 1713 and FDRA for PDSCH of cell group #2 1723. Each DCI field may include the above-described control information in a format such as case (b) 1760. Such a format may be equally applied to a DCI configuration for multi-cell multi-PUSCH scheduling.

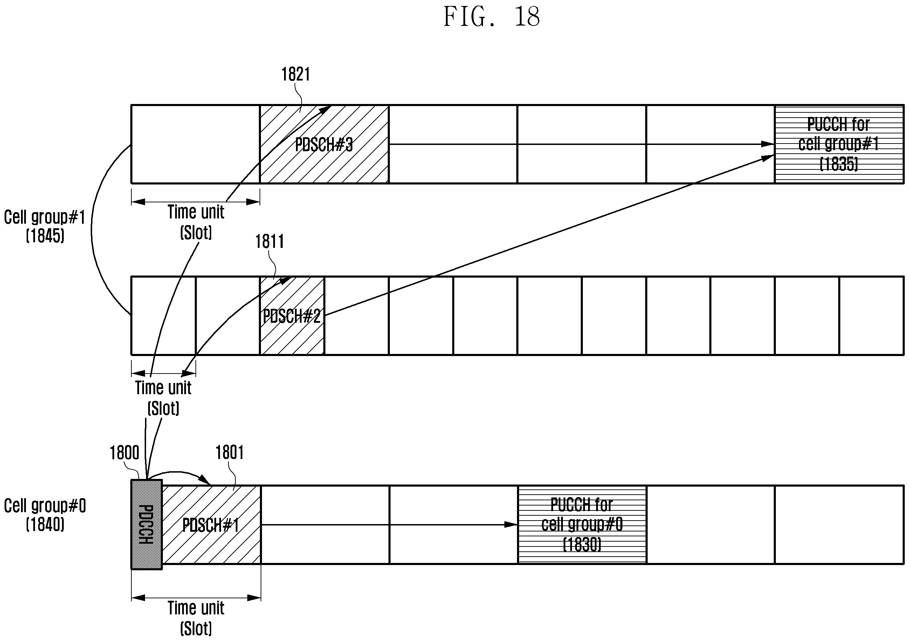

FIG. 18 illustrates an example of an HARQ-ACK operation according to the PUCCH group described above.

A base station may pre-configure PUCCH cell group #0 and #1 1840 and 1845 for a UE. When the UE receives a PDCCH 1800 in a downlink cell, HARQ-ACK information of a PDSCH scheduled by the PDCCH may be transmitted on a PUCCH in an uplink cell defined in a PUCCH group including a downlink cell on which the PDSCH is transmitted.

For example, if PUCCH cell group #0 1840 is configured for a first cell and the UE is indicated to receive PDSCH#1 1801 in the first cell, HARQ-ACK relating thereto may be performed on a PUCCH for cell group #0 1830, which is configured in PUCCH cell group #0 1840.

For another example, if PUCCH cell group #1 1845 is configured for a second cell and the UE is indicated to receive PDSCH#2 1811 in the second cell, HARQ-ACK relating thereto may be performed on a PUCCH for cell group #1 1835, which is configured in PUCCH cell group #1 1845.

For another example, if PUCCH cell group #1 1845 is configured for a third cell and the UE is indicated to receive PDSCH#3 1821, HARQ-ACK relating thereto may be performed on a PUCCH for cell group #1 1835, which is configured in PUCCH cell group #1 1845.

[Method 3-2. A method of sharing a bit field for multi-cell PDSCH and multi-cell PUSCH scheduling]

A base station may share a bit field within the same DCI in order to schedule a multi-cell PDSCH or a multi-cell PUSCH to a UE. For example, if a bit field of multi-cell PDSCH scheduling information is N bits and a bit field of multi-cell PUSCH scheduling information is K bits, scheduling may be performed with reference to the larger bit field between the N bits and the K bits. If the N bits of the multi-cell PDSCH scheduling information are larger than the K bits of the multi-cell PUSCH scheduling information, a bit field of multi-cell scheduling information may be configured with reference to N bits in DCI. If the base station schedules a multi-cell PDSCH to the UE, DCI information may configure scheduling information by using N bits. On the other hand, if the base station schedules a multi-cell PUSCH to the UE, K bits of scheduling information are configured and zero padding corresponding to the remaining N-K bits may be included in the DCI information. Conversely, if the number of bits of multi-cell PUSCH scheduling information is greater than the number of bits of multi-cell PDSCH scheduling information, N bits of scheduling information are configured and zero padding corresponding to K-N bits may be included in the multi-cell PDSCH scheduling information. K bits of scheduling information may be configured in the multi-cell PUSCH scheduling information.

<Second embodiment: A method of indicating multi-cell scheduling by using bitmap information in DCI>

A base station may indicate to a UE whether it is multi-cell scheduling within a DCI format through bitmap information.

For multi-cell PDSCH or multi-cell PUSCH scheduling, the base station may configure a TDRA table for the UE through a higher layer signal. The base station may include a bitmap in the DCI format to indicate multi-cell PDSCH reception or multi-cell PUSCH transmission to each UE. Each bit of the bitmap may correspond to one cell index information or a cell group index obtained by grouping multiple cells.

For example, for multi-cell multi-PDSCH or multi-cell multi-PUSCH scheduling, the base station may configure a TDRA table for the UE through a higher layer signal. The TDRA table may include one or multiple rows. The UE may receive an indication of one TDRA row from the base station through a TDRA field included in DCI. If multiple pieces of cell scheduling information is included in the indicated TDRA row, the base station may indicate a cell index (or cell group index) through bitmap information in the DCI format in order to indicate a cell or cells through which PDSCH reception or PUSCH transmission is to be performed.

For example, when an n-th bit of the bitmap is indicated as 1, the UE may receive a PDSCH or transmit a PUSCH through an n-th cell. In this case, the number of bits indicated as 1 in the bitmap may be one or more. Therefore, the UE may determine a cell through which a PDSCH is to be received or a PUSCH is to be transmitted, according to the bitmap indicated by the base station.

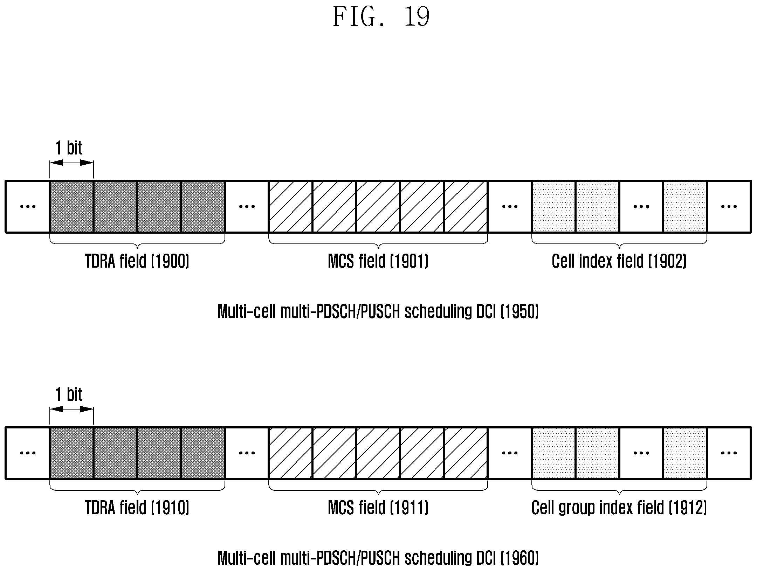

FIG. 19 illustrates an example of a multi-cell scheduling indication method using the bitmap described above.

Case (a) 1950 of FIG. 19 illustrates a method of indicating a cell index through a bitmap. In a DCI format, a bitmap 1902 for cell index indication may be configured to be up to 0, .. $N_{row}$-1 (or 0, ... , $N_{cell}$ - 1, where $N_{cell}$ is the number of cells configured for a UE), a cell through which a PDSCH is to be received or a PUSCH is to be transmitted may be determined based on a bit indicated as 1. For example, a base station may configure scheduling information for three cells in TDRA row #0 for the UE. In order to indicate multiple cell scheduling to the UE, when TDRA row #0 is indicated in a TDRA field of DCI, the base station may indicate an index of a cell to be scheduled through a bitmap in the DCI. In this case, for example, three bits of the bitmap within the DCI may be configured to be 1, and in this case, a cell indicated by each bit may correspond to each piece of scheduling information in TDRA row #0.

Case (b) 1960 of FIG. 19 illustrates a method of indicating a cell group index through a bitmap. In a DCI format, a bitmap 1912 for cell group index indication may be configured to be up to 0, .. $N_{row}$-1 (or 0, ..., $N_{cell\ group}$ - 1, where $N_{cell\ group}$ is the number of cell groups configured for the UE), a cell group through which a PDSCH is to be received or a PUSCH is to be transmitted may be determined based on the number of bits indicated as 1. For example, the base station may configure configuration information for two cell groups in TDRA row #0 for the UE. In order to indicate multiple cell scheduling to the UE, when TDRA row #0 is indicated in a TDRA field of DCI, the base station may indicate an index of a cell group to be scheduled through a bitmap in the DCI. In this case, for example, cells in a cell group indicated by the bitmap in the DCI may correspond to pieces of scheduling information in TDRA row #0, respectively, or cell groups may correspond to pieces of scheduling information in TDRA row #0, respectively.

**<Third embodiment: A multi-cell scheduling method using FDRA field information>**

In an embodiment, a method of scheduling multiple cells through a frequency resource configuration information (FDRA) field in a DCI format is described.

A base station may configure an FDRA type for a UE through higher layer configuration information. In this case, the base station may configure an FDRA type for each cell for multiple cell scheduling. A difference from the multiple cell scheduling based on TDRA described above is that a cell to be scheduled is distinguished through a frequency resource configuration. In addition, in order to prevent operation ambiguity such as a collision between cells in a time domain when using only FDRA, multiple cell scheduling may be performed through a combination with other configuration information. The detailed method will be described below.

[Method 4-1. A method of configuring FDRA for each cell]

A base station may configure, for a UE, an FDRA field corresponding to each cell for multiple cell scheduling.

When the number of cells configurable for the UE is up to N, the number of configurable FDRA fields may also be up to N. In this case, an FDRA field may be frequency resource configuration information of type 0 or type 1 depending on a configuration of the base station.

In addition, in order to enable the UE to know which cell an FDRA field indicated by the base station corresponds to, a cell index included in a DCI format may be located at the very beginning (MSB) of each FDRA bit field.

For example, cell index #0 may correspond to FDRA #0, and cell index #1 may correspond to FDRA #1. If the base station indicates scheduling by including cell index #0 and cell index #1 in a single piece of DCI, the UE may determine that multiple cells are scheduled. In addition, according to the scheduled cell index, the UE may perform PDSCH reception or PUSCH transmission through FDRA#0 for cell index #0, and perform PDSCH reception or PUSCH transmission through FDRA#1 for cell index #1.

If an FDRA field satisfies a specific condition, PDSCH reception or PUSCH transmission based on the FDRA field may not be scheduled. For example, when the FDRA field is configured as resource allocation (RA) type 0, if the FDRA field corresponds to all "0s", the UE may determine that PDSCH reception or PUSCH transmission is not scheduled through the FDRA field. Alternatively, when the FDRA field is configured as RA type 1, if the FDRA field corresponds to all "1s", the UE may determine that PDSCH reception or PUSCH transmission is not scheduled through the FDRA field. If the FDRA field is configured by a dynamic switch (RA type 0 and RA type 1 are determined by 1 bit of the FDRA field, and if 1 bit is "0", it indicates RA type 0, and if 1 bit is "1", it indicates RA type 0), the field corresponds to all "0s" or all "1s", the UE may determine that PDSCH reception or PUSCH transmission is not scheduled through the FDRA field.

[Method 4-1-1. A method of configuring FDRA for one or multiple cells]

A base station may configure information on FDRA for a UE. Here, a DCI format monitored by the UE may include N FDRA fields. The base station may configure an index of a cell corresponding to each FDRA field. Here, an index of one or more cells may be configured in one FDRA field. However, one specific cell index may be configured in one FDRA field, but may not be configured in multiple FDRA fields.

When the UE obtains scheduling information through the FDRA field, scheduling information of the FDRA field may be applied to one or multiple cells configured in the FDRA field. That is, when indexes of multiple cells corresponding to the FDRA field are configured, the UE may receive a PDSCH or transmit a PUSCH by applying scheduling information obtained from the FDRA field to the multiple cells.

Method 4-1-1 may reduce overhead of an FDRA field in a DCI format when compared to method 4-1. Therefore, the reliability of PDCCH reception may be increased.

[Method 4-2. A method of performing indication in association with other configuration information after configuring FDRA]

An FDRA configuration may be used in addition to TDRA and bitmap indications of the first embodiment and the second embodiment.

Since the operation of method 1 includes dividing multiple cells only by a frequency resource, operation ambiguity may occur in a UE, such as a collision in transmission from or to different cells in a time domain. To this end, when multiple cell scheduling is performed, FDRA may be configured in association with a TDRA configuration or a bitmap.

[Method 4-2-1. An FDRA indication method through TDRA]

A base station may indicate an FDRA field corresponding to each piece of scheduling information through TDRA row information (based on higher layer configuration information). Here, a DCI format may include multiple FDRA fields, and the FDRA fields may be assigned unique indexes.

The base station may configure TDRA and FDRA information for a UE through higher layer configuration information. In this case, the TDRA configuration information may include a row including multiple cell scheduling information in one row, as described in the first embodiment. Up to N pieces of FDRA configuration information may be configured.

When the base station performs multiple cell scheduling, one TDRA row may include scheduling information (cell index, K0, SLIV, mapping type, and FDRA index). The UE may identify an indicated TDRA row to determine a cell through which PDSCH reception or PUSCH transmission is to be performed, and identify a frequency resource through an FDRA index included in the TDRA row information.

[Method 4-2-2. An FDRA indication method through bitmap information]

A base station may indicate FDRA through a cell index indication bitmap.

The base station may configure FDRA information for a UE through higher layer configuration information. In this case, each piece of FDRA information may correspond to a cell index. In this case, multiple cell scheduling may be indicated through a bitmap in a DCI format, as described in the second embodiment.

When the base station performs multiple cell scheduling, the base station may indicate a cell to be scheduled to the UE through bitmap information in the DCI format. The UE may receive a PDSCH or transmit a PUSCH in each cell corresponding to a bit indicated as "1" in the indicated bitmap. In this case, the UE may receive a PDSCH or transmit a PUSCH by applying FDRA corresponding to a cell index configured according to an RRC signal.

The first to third embodiments described above are not separate, and the base station and the UE may operate in combination of parts of the first to third embodiments.

In addition, in the first to third embodiments described above, a cell index may be replaced with a cell group index, and in this case, one or more cells may be configured within a cell group through a higher layer signal.

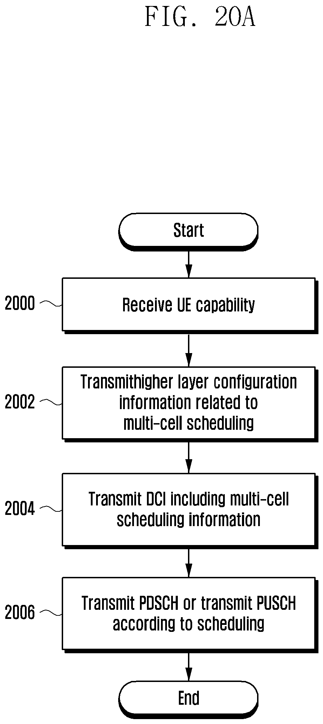

FIG. 20A illustrates an example of an operation of a base station according to an embodiment of the disclosure.

According to FIG. 20A, a base station may receive capability (or UE capability) information of a UE from the UE (2000). The base station may transmit scheduling information through a higher layer signal (e.g., an RRC signal) based on UE capability (2002). In this case, the higher layer signal may include multi-cell scheduling-related information. The specific content of multi-cell scheduling-related information may follow a combination of at least one of the first to third embodiments described above. The base station may transmit DCI including multi-cell scheduling information in order to indicate multi-cell scheduling to the UE

(2004). In this case, a DCI format and the type and content of control information included in the DCI may follow a combination of at least one of the first to third embodiments described above. According to scheduling information, the base station may transmit a PDSCH to the UE or receive a PUSCH from the UE (2006).

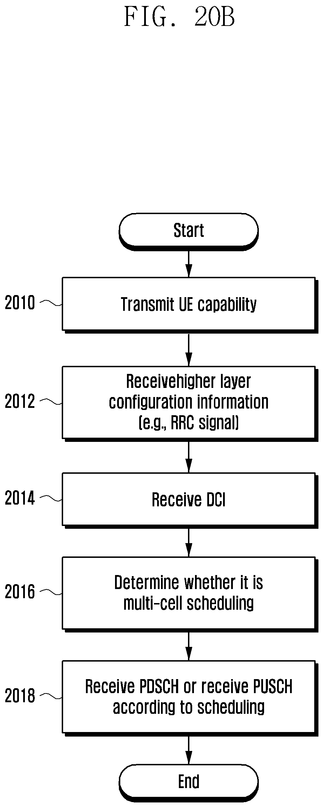

FIG. 20B illustrates an example of an operation of a UE according to an embodiment of the disclosure.

According to FIG. 20B, a UE may transmit UE capability information to a base station (2010). The UE may receive scheduling information from the base station through a higher layer signal (e.g., an RRC signal) (2012). In this case, the higher layer signal may include multi-cell scheduling-related information. The specific content of multi-cell scheduling-related information may follow a combination of at least one of the first to third embodiments described above. The UE may receive DCI from the base station (2014), and in this case, the DCI may include multi-cell scheduling information. In this case, a DCI format and the type and content of control information included in the DCI may follow a combination of at least one of the first to third embodiments described above. Based on the received DCI, the UE may determine whether it is multi-cell scheduling or single-cell scheduling, at least one cell scheduled, and at least one piece of scheduling information (2016). The UE may receive a PDSCH from the base station or transmit a PUSCH to the base station, based on scheduling information (2018).

The above-described flowchart illustrates an exemplary method that may be implemented according to the principle of the disclosure, and various changes may be made to the method shown in the flowchart herein. For example, although shown as a series of operations, various operations in each figure may overlap, occur in parallel, occur in a different order, or occur multiple times. In another example, an operation may be omitted or replaced with another operation.

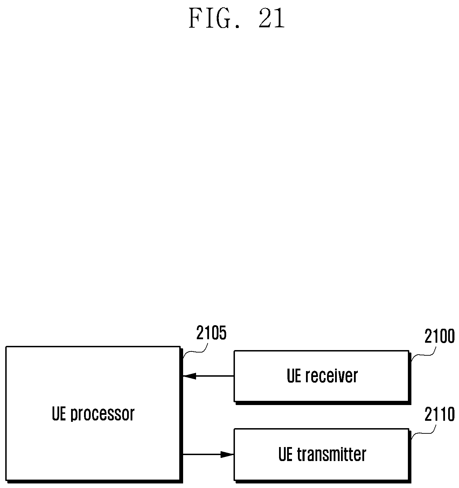

FIG. 21 illustrates a structure of a UE in a wireless communication system according to an embodiment of the disclosure.

Referring to FIG. 21, the UE may include a transceiver, which refers to a UE receiver 2100 and a UE transmitter 2110 as a whole, a memory (not illustrated), and a UE processor 2105 (or UE controller or processor). The UE transceiver 2100 and 2110, the memory, and the UE processor 2105 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

The processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

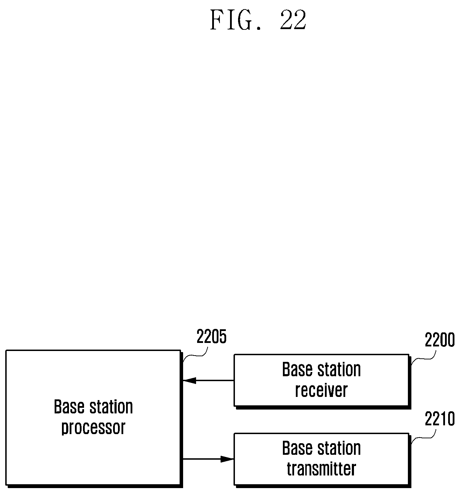

FIG. 22 illustrates a structure of a base station in a wireless communication system according to an embodiment of the disclosure.

Referring to FIG. 22, the base station may include a transceiver, which refers to a base station receiver 2200 and a base station transmitter 2210 as a whole, a memory (not illustrated), and a base station processor 2105 (or base station controller or processor). The base station transceiver 2200 and 2210, the memory, and the base station processor 2205 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers, including allocation information regarding multiple PDSCHs, and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a wireless communication system, the method comprising:

   receiving time domain resource allocation (TDRA) configuration information from a base station through higher layer signaling, wherein the TDRA configuration information comprises a plurality of rows, and each row comprises one or more pieces of data channel scheduling information;
   receiving downlink control information for scheduling a data channel from the base station, wherein the downlink control information includes a cell index indicator and a TDRA field, and the TDRA field indicates one row among the plurality of rows; and
   based on one or more pieces of data channel scheduling information included in the indicated row and one or more cell indexes indicated by the cell index indicator, transmitting or receiving a data channel in each of cells corresponding to the one or more cell indexes.

2. The method of claim 1, wherein the downlink control information further comprises a frequency domain resource allocation (FDRA) field, and in case that the FDRA field is configured to be a predetermined value, the FDRA field indicates that a cell corresponding to the FDRA field is not scheduled.

3. The method of claim 1, wherein in case that the downlink control information is downlink control information for uplink data channel scheduling, the downlink control information further comprises a transmit power control (TPC) command field, an open-loop power control parameter set indication field, a precoding information field, and an antenna port field.

4. The method of claim 1, wherein in case that the downlink control information is downlink control information for downlink data channel scheduling, the downlink control information further comprises a rate matching indicator field, a transmission configuration indication (TCI) field, and an antenna port field.

5. A method performed by a base station in a wireless communication system, the method comprising:

   transmitting time domain resource allocation (TDRA) configuration information to a terminal through higher layer signaling, wherein the TDRA configuration information comprises a plurality of rows, and each row comprises one or more pieces of data channel scheduling information;
   transmitting downlink control information for scheduling a data channel to the terminal, wherein the downlink control information includes a cell index indicator and a TDRA field, and the TDRA field indicates one row among the plurality of rows; and
   receiving or transmitting a data channel in each of cells corresponding to one or more cell indexes related to the cell index indicator,
   wherein the data channel corresponds to one or more pieces of data channel scheduling information included in the indicated row.

6. The method of claim 5 wherein the downlink control information further comprises a frequency domain resource allocation (FDRA) field, and in case that the FDRA field is configured to be a predetermined value, the FDRA field indicates that a cell corresponding to the FDRA field is not scheduled.

7. The method of claim 5 wherein in case that the downlink control information is downlink control information for uplink data channel scheduling, the downlink control information further comprises a transmit power control (TPC) command field, an open-loop power control parameter set indication field, a precoding information field, and an antenna port field.

8. The method of claim 5 wherein in case that the downlink control information is downlink control information for downlink data channel scheduling, the downlink control information further comprises a rate matching indicator field, a transmission configuration indication (TCI) field, and an antenna port field.

9. A terminal in a wireless communication system, the terminal comprising:

a transceiver; and
a controller configured to:

receive time domain resource allocation (TDRA) configuration information from a base station through higher layer signaling, wherein the TDRA configuration information comprises a plurality of rows, and each of the rows comprises one or more pieces of data channel scheduling information,
receive downlink control information for scheduling a data channel from the base station, wherein the downlink control information includes a cell index indicator and a TDRA field, and the TDRA field indicates one row among the plurality of rows, and
based on one or more pieces of data channel scheduling information included in the indicated row and one or more cell indexes indicated by the cell index indicator, transmit or receive a data channel in each of cells corresponding to the one or more cell indexes.

10. The terminal of claim 9, wherein the downlink control information further comprises a frequency domain resource allocation (FDRA) field, and in case that the FDRA field is configured to be a predetermined value, the FDRA field indicates that a cell corresponding to the FDRA field is not scheduled.

11. The terminal of claim 9, wherein in case that the downlink control information is downlink control information for uplink data channel scheduling, the downlink control information further comprises a transmit power control (TPC) command field, an open-loop power control parameter set indication field, a precoding information field, and an antenna port field.

12. The terminal of claim 9, wherein in case that the downlink control information is downlink control information for downlink data channel scheduling, the downlink control information further comprises a rate matching indicator field, a transmission configuration indication (TCI) field, and an antenna port field.

13. A base station in a wireless communication system, the base station comprising:

a transceiver; and
a controller configured:

transmit time domain resource allocation (TDRA) configuration information to a terminal through higher layer signaling, wherein the TDRA configuration information comprises a plurality of rows, and each row comprises one or more pieces of data channel scheduling information,
transmit downlink control information for scheduling a data channel to the terminal, wherein the downlink control information comprises a cell index indicator and a TDRA field, and the TDRA field indicates one row among the plurality of rows, and
receive or transmit a data channel in each of cells corresponding to one or more cell indexes related to the cell index indicator,
wherein the data channel corresponds to one or more pieces of data channel scheduling information included in the indicated row.

14. The base station of claim 13, wherein the downlink control information further comprises a frequency domain resource allocation (FDRA) field, and in case that the FDRA field is configured to be a predetermined value, the FDRA field indicates that a cell corresponding to the FDRA field is not scheduled.

15. The base station of claim 13, wherein in case that the downlink control information is downlink control information for uplink data channel scheduling, the downlink control information further comprises a transmit power control (TPC) command field, an open-loop power control parameter set indication field, a precoding information field, and an antenna port field, and

wherein in case that the downlink control information is downlink control information for downlink data channel scheduling, the downlink control information further comprises a rate matching indicator field, a transmission configuration indication (TCI) field, and an antenna port field.

# FIG. 1

Subframe (110)

$N_{symb}^{subframe,\mu}$ OFDM symbol

1 OFDM symbol (102)

1 Subcarrier (103)

$k = N_{RB,x}^{max,\mu} N_{sc}^{RB} - 1$

Resource block $N_{sc}^{RB}$ Subcarriers (104)

$N_{RB}^{\mu} N_{sc}^{RB}$ subcarriers

Resource element (k,l) (101)

Frequency

$k = 0$

$\bar{l} = 0$

$\bar{l} = 14 \cdot 2^{\mu} - 1$

Time

# FIG. 2

EP 4 496 413 A1

FIG. 3

BWP#1
(301)

BWP#2
(302)

UE bandwidth
(300)

Frequency

# FIG. 4

Duration (404)

Frequency resource (403)

UE bandwidth part (410)

slot (420)

Frequency

Time

▨ Control resource set #1 (401)

▨ Control resource set #2 (402)

# FIG. 5

FIG. 6

# FIG. 7

RA type 0 (700) — Bitmap (715)

RA type 1 (705) — Start VRB (720) | Length (725)

RA type 0 & 1 (710) — 1 bit for indication of type (730) | Max {type 0 payload, type 1 payload} (735)

EP 4 496 413 A1

FIG. 8

S
(800)

L (805)

| 0 | 1 | 2 | 3 | 4 | 5 | 6 | 7 | 8 | 9 | 10 | 11 | 12 | 13 |
|---|---|---|---|---|---|---|---|---|---|----|----|----|----|

OFDM symbol

$$\text{Slot} \left\lfloor n \cdot \frac{2^{\mu_{PDSCH}}}{2^{\mu_{PDCCH}}} \right\rfloor + K_0 \quad (810)$$

# FIG. 9

EP 4 496 413 A1

(900)

$\mu_{\text{PDCCH}} = 1$ — PDCCH | — Slot n — Slot n + 1 — · · · — t

$\mu_{\text{PDSCH}} = 1$ — Slot n + $K_0$ — PDSCH — t

(905)

$\mu_{\text{PDCCH}} = 1$ — PDCCH — Slot n — Slot n + 1 — · · · — t

$\mu_{\text{PDSCH}} = 2$ — PDSCH — t

$$\text{Slot} \left\lfloor n \cdot \frac{2^{\mu_{\text{PDSCH}}}}{2^{\mu_{\text{PDCCH}}}} \right\rfloor$$

$$\text{Slot} \left\lfloor n \cdot \frac{2^{\mu_{\text{PDSCH}}}}{2^{\mu_{\text{PDCCH}}}} \right\rfloor + K_0$$

# FIG. 10

**Single cell (LTE/NR) (1000)**

gNB
- SDAP (1025)
- PDCP (1030)
- RLC (1035)
- MAC (1040)
- PHY (1045)

UE
- PHY (1050)
- MAC (1055)
- RLC (1060)
- PDCP (1065)
- SDAP (1070)

**Carrier aggregation (1010)**

gNB
- SDAP
- PDCP
- RLC
- MAC
- PHY ... PHY

UE
- PHY ... PHY
- MAC
- RLC
- PDCP
- SDAP

**Dual connectivity (1020)**

MgNB
- SDAP
- PDCP
- RLC
- MAC
- PHY

SgNB
- RLC
- MAC
- PHY

UE
- PHY
- MAC
- RLC
- PDCP
- SDAP

UE
- PHY
- MAC
- RLC

EP 4 496 413 A1

# FIG. 11

(a) TDRA row 0
(1150)

Time unit
(Slot)

(b) TDRA row 1
(1160)

Time unit
(Slot)

(c) TDRA row 2
(1170)

Time unit
(Slot)

EP 4 496 413 A1

# FIG. 12

TDRA field (1200)

MCS field (1205)

NDI field for single PDSCH (1210)

RV field for single PDSCH (1215)

HARQ process number field (1220)

Antenna port(s) field (1225)

DMRS sequence initialization field (1230)

Padding bits (1235)

1 bit

(a) Single PDSCH scheduling DCI

TDRA field (1200)

MCS field (1255)

NDI field for first PDSCH (1260)

RV field for first PDSCH (1262)

NDI field for second PDSCH (1261)

RV field for second PDSCH (1263)

HARQ process number field (1270)

Antenna port(s) field (1275)

DMRS sequence initialization field (1280)

1 bit

(b) Multiple PDSCH scheduling DCI

FIG. 13

EP 4 496 413 A1

FIG. 14

1 bit

Multi-cell
scheduling index
(1400)

TDRA field
(1405)

MCS field
(1405)

NDI field
for single
PDSCH
(1410)

RV field
for single
PDSCH
(1415)

HARQ process
number field
(1420)

Antenna port(s)
field
(1425)

DMRS
sequence
initialization field
(1430)

Multi-cell PDSCH scheduling DCI

EP 4 496 413 A1

# FIG. 15

Multi-cell PDSCH scheduling DCI

Multi-cell scheduling index (1500)

TDRA field (1505)

MCS field (1510)

NDI field for single PDSCH (1515)

RV field for single PDSCH (1520)

HARQ process number field (1525)

Antenna port(s) field (1530)

DMRS sequence initialization field (1535)

FIG. 16

DCI field for cell index #1 [1615]

DCI field for cell index #0 [1610]

TDRA field [1601]

MCS field [1602]

FDRA fields [1603]

NDI field [1604]

RV field [1605]

HARQ process number field [1606]

Antenna port(s) field [1607]

DMRS sequence initialization field [1608]

Multi-cellmulti-PDSCH DCI [1650]

TDRA field [1611]

MCS field [1612]

FDRA for PDSCH of cell #1 [1613]

FDRA for PDSCH of cell #2 [1623]

NDI field for PDSCH of cell #1 [1614]

NDI field for PDSCH of cell #2 [1624]

RV field for PDSCH of cell #1 [1625]

RV field for PDSCH of cell #2 [1625]

HARQ process number field of cell #1 [1616]

HARQ process number field of cell #2 [1626]

Antenna port(s) field of cell #1 [1617]

Antenna port(s) field of cell #2 [1627]

DMRS sequence initialization field of cell #1 [1618]

DMRS sequence initialization field of cell #2 [1628]

Multi-cellmulti-PDSCH DCI [1660]

1 bit

1 bit

FIG. 17

DCI field for cell group index#1 [1715]

DCI field for cell group index#0 [1710]

DMRS sequence initialization field [1708]

Antenna port(s) field [1707]

HARQ process number field [1706]

RV field [1705]

NDI field [1704]

FDRA field [1703]

MCS field [1702]

TDRA field [1701]

Multi-cellgroupmulti-PDSCH DCI [1750]

DMRS sequence initialization field of cell group#2 [1728]

DMRS sequence initialization field of cell group#1 [1718]

Antenna port(s) field of cell group#2 [1727]

Antenna port(s) field of cell group#1 [1717]

HARQ process number for PDSCH of cell group#2 [1726]

HARQ process number for PDSCH of cell group#1 [1716]

RV field for PDSCH of cell group#2 [1725]

RV field for PDSCH of cell group#1 [1715]

NDI field for PDSCH of cell group#2 [1724]

NDI field for PDSCH of cell group#1 [1714]

FDRA field for PDSCH of cell group#2 [1723]

FDRA field for PDSCH of cell group#1 [1713]

MCS field [1712]

TDRA field [1711]

1 bit

Multi-cellgroupmulti-PDSCH DCI [1760]

FIG. 18

EP 4 496 413 A1

FIG. 19

1 bit

TDRA field (1900)　　　MCS field (1901)　　　Cell index field (1902)

Multi-cell multi-PDSCH/PUSCH scheduling DCI (1950)

1 bit

TDRA field (1910)　　　MCS field (1911)　　　Cell group index field (1912)

Multi-cell multi-PDSCH/PUSCH scheduling DCI (1960)

EP 4 496 413 A1

# FIG. 20A

```
                    ┌──────────────┐
                    │    Start     │
                    └──────────────┘
                           │
                           ▼
        ┌──────────────────────────────────────┐
2000 ~  │         Receive UE capability          │
        └──────────────────────────────────────┘
                           │
                           ▼
        ┌──────────────────────────────────────┐
        │  Transmithigher layer configuration    │
2002 ~  │         information related to         │
        │          multi-cell scheduling         │
        └──────────────────────────────────────┘
                           │
                           ▼
        ┌──────────────────────────────────────┐
2004 ~  │    Transmit DCI including multi-cell    │
        │         scheduling information         │
        └──────────────────────────────────────┘
                           │
                           ▼
        ┌──────────────────────────────────────┐
2006 ~  │   Transmit PDSCH or transmit PUSCH     │
        │        according to scheduling         │
        └──────────────────────────────────────┘
                           │
                           ▼
                    ┌──────────────┐
                    │     End      │
                    └──────────────┘
```

FIG. 20B

```
                    ( Start )
                        │
                        ▼
2010 ──┌─────────────────────────────────┐
       │      Transmit UE capability      │
       └─────────────────────────────────┘
                        │
                        ▼
2012 ──┌─────────────────────────────────┐
       │        Receivehigher layer       │
       │     configuration information    │
       │         (e.g., RRC signal)       │
       └─────────────────────────────────┘
                        │
                        ▼
2014 ──┌─────────────────────────────────┐
       │            Receive DCI           │
       └─────────────────────────────────┘
                        │
                        ▼
2016 ──┌─────────────────────────────────┐
       │       Determine whether it is    │
       │        multi-cell scheduling     │
       └─────────────────────────────────┘
                        │
                        ▼
2018 ──┌─────────────────────────────────┐
       │   Receive PDSCH or receive PUSCH │
       │        according to scheduling   │
       └─────────────────────────────────┘
                        │
                        ▼
                     ( End )
```

FIG. 21

FIG. 22

2205

Base station
processor

2200

Base station
receiver

2210

Base station
transmitter

## INTERNATIONAL SEARCH REPORT

| International application No. |
|---|
| **PCT/KR2023/005329** |

| A. | CLASSIFICATION OF SUBJECT MATTER |
|---|---|

**H04W 72/23**(2023.01)i; **H04W 72/04**(2009.01)i; **H04W 72/12**(2009.01)i; **H04L 5/00**(2006.01)i; **H04L 1/00**(2006.01)i; **H04L 27/26**(2006.01)i

According to International Patent Classification (IPC) or to both national classification and IPC

| B. | FIELDS SEARCHED |
|---|---|

Minimum documentation searched (classification system followed by classification symbols)

H04W 72/23(2023.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복수(plurality), 셀(cell), TDRA(time domain resource allocation), 행(row), 스케줄링(scheduling), 하향링크 제어 정보(downlink control information)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021-162858 A1 (QUALCOMM INCORPORATED) 19 August 2021 (2021-08-19) See paragraphs [0065]-[0067]; and figure 5. | 1,5,9,13 |
| Y | | 2-4,6-8,10-12,14-15 |
| Y | WO 2022-077422 A1 (APPLE INC.) 21 April 2022 (2022-04-21) See paragraphs [0033], [0045] and [0049]; and figure 3. | 2-4,6-8,10-12,14-15 |
| A | CATT. Discussion on multi-cell PDSCH scheduling via a single DCI. R1-2104496, 3GPP TSG RAN WG1 #105-e. 12 May 2021. See section 2. | 1-15 |
| A | PANASONIC. Discussion on PDSCH/PUSCH enhancements for NR 52.6-71 GHz. R1-2111424, 3GPP TSG RAN WG1 #107-e. 05 November 2021. See sections 1-2.2.2. | 1-15 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 July 2023** | **28 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/005329** |

**C.    DOCUMENTS CONSIDERED TO BE RELEVANT**

| Category* | Citation of document, with indication, where appropriate, of the relevant passages | Relevant to claim No. |
|---|---|---|
| A | LG ELECTRONICS. PDSCH/PUSCH enhancements to support NR above 52.6 GHz. R1- 2109965, 3GPP TSG RAN WG1 #106bis-e. 02 October 2021.<br>      See sections 1-6. | 1-15 |

Form PCT/ISA/210 (second sheet) (July 2022)

| | INTERNATIONAL SEARCH REPORT<br>Information on patent family members | | | | International application No.<br>**PCT/KR2023/005329** | |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| WO | 2021-162858 | A1 | 19 August 2021 | CN 115066965 | A | 16 September 2022 |
| | | | | EP 4104604 | A1 | 21 December 2022 |
| | | | | US 11564247 | B2 | 24 January 2023 |
| | | | | US 2021-0258999 | A1 | 19 August 2021 |
| WO | 2022-077422 | A1 | 21 April 2022 | None | | |

Form PCT/ISA/210 (patent family annex) (July 2022)